# EUROPÄISCHE PATENTSCHRIFT

(11) **EP 3 903 653 B1**
(45) Veröffentlichungstag und Bekanntmachung des Hinweises auf die Patenterteilung: **10.04.2024**
(21) Anmeldenummer: 21170641.1
(22) Anmeldetag: 27.04.2021
(51) Int. Cl.: A47J 37/07

(54) **PORTABLES GRILLGERÄT, VERFAHREN ZU DESSEN HANDHABUNG SOWIE VERWENDUNG EINES SOLCHEN PORTABLEN GRILLGERÄTES**
PORTABLE GRILLING DEVICE, METHOD FOR ITS HANDLING AND USE OF SUCH A PORTABLE GRILLING DEVICE
GRIL PORTABLE, SON PROCÉDÉ DE MANIPULATION, AINSI QU'UTILISATION D'UN TEL GRIL PORTABLE

(30) Priorität: 30.04.2020 DE 102020205543
(43) Veröffentlichungstag der Anmeldung: 03.11.2021
(73) Patentinhaber: Seiler, Raphael, 93049 Regensburg (DE)
(72) Erfinder: Seiler, Raphael, 93049 Regensburg (DE)
(74) Vertreter: Benninger, Johannes

(56) Entgegenhaltungen:
- AT-B- 287 950
- CH-A- 377 505
- FR-A- 1 315 759
- US-A- 4 040 343

## Beschreibung

Die vorliegende Erfindung betrifft ein portables Grillgerät zum Garen von Lebensmitteln mit den Merkmalen des unabhängigen Anspruchs 1. Zudem betrifft die Erfindung ein Verfahren zur Handhabung und/oder Verwendung eines solchen portablen Grillgerätes mit den Merkmalen des unabhängigen Verfahrensanspruches.

Das einfachste bekannte Verfahren zum Garen von Lebensmitteln, insbesondere von Fleisch, besteht im Braten über dem offenen Feuer. Beim Grillen wird das Gargut im Wesentlichen durch Wärmestrahlung gegart und an der Oberfläche geröstet. Dazu kann das Gargut bspw. auf einen Grillrost gelegt werden, der sich in definiertem Abstand über dem offenen Feuer oder einer als Wärmequelle dienenden Glut befindet. Als Hitzequelle eignen sich Holzfeuer oder Holzglut, Gas, durch Gas erhitzte Steine oder elektrische Heizschleifen.

Um das Garen und insbesondere die Wärmequelle besser kontrollieren zu können, genügen bereits einfach aufgebaute Grillgeräte. Solche einfachen portablen Grillgeräte, die meist mit Holzkohle betrieben werden, erfordern eine hitzebeständige Schale zur Aufnahme der Holzkohle, die meist aus Stahlblech oder Gusseisen besteht, und eine in definiertem Abstand oberhalb dieser Schale fixierbare Auflage für das Gargut. Die als Grillrost zu bezeichnende Auflage ist üblicherweise durch ein metallenes Gitter gebildet, auf der das Gargut abgelegt werden kann, sofern nicht eine wärmeleitende Zwischenlage zur Vermeidung eines direkten Kontaktes der zu garenden Speisen mit dem Feuer, der Asche und dem Rauch auf den Grillrost gelegt wird.

Portable Grillgeräte sind in unterschiedlichen Varianten und in unterschiedlicher Komplexität bekannt. Ein Problem, das sich jedem Benutzer solcher Grillgeräte stellt, ist der Prozess des Anzündens und die Phase der Erhitzung des Brennstoffes. Bei der Verwendung von Holzkohle ist für eine gute Belüftung zu sorgen, damit der gesamte Brennstoff gleichmäßig brennt und in seiner Glutphase das Grillgut möglichst gleichmäßig mit ausreichender Temperatur erhitzen kann. Wie es gleichermaßen jedem Benutzer vertraut ist, erfordert die ausreichende Luftversorgung des Brennstoffes einen gewissen Aufwand, was in manchen Fällen dennoch keine ausreichende Gewähr bieten kann, dass der gesamte Brennstoff gleichmäßig durchglüht. Ein unerwünschter, aber oftmals schwer zu vermeidender Effekt in der Vorbereitungsphase des Grillgerätes zum späteren Garen stellt ein ungleichmäßiges Anbrennen des Brennstoffes dar.

Aus dem Stand der Technik sind unterschiedliche tragbare Kocher zur Verwendung mit Holzkohle oder ähnlichen Brennstoffen bekannt, die sich den Kamineffekt zu Nutze machen wollen, um den Brennstoff schneller und gleichmäßiger zu entzünden.

So offenbart die DE 26 45 867 C2 einen tragbaren Kocher, der einen Rahmen und gewölbte Brennstofftröge aufweist, die mit entgegengesetzten Enden des Rahmens zur Bewegung zwischen einer angehobenen Anzündstellung und einer abgesenkten Kochstellung gelenkig verbunden sind. Die Brennstofftröge sind an ihren gegenüberliegenden Enden jeweils offen, um einen Ofenzug bilden zu können, wenn sie sich in ihrer angehobenen Stellung befinden. Hierbei kann die Luft ihren Weg von einer Mittelöffnung des Rahmens durch die Brennstofftröge nehmen und an ihren offenen oberen Enden austreten. Innerhalb der gewölbten Brennstofftröge sind zudem Lagerpunkte zur Aufnahme von Gitterrosten vorgesehen. Die Gitterroste können beim Anzünden zusammen mit den Brennstofftrögen vertikal gestellt werden und sollen dadurch zusammen mit den am unteren offenen Ende der Brennstofftröge abstehenden Zähnen ein Herabfallen und Zusammenfallen der in den beiden Brennstofftrögen aufgenommenen Brennstoffbrocken verhindern. Weiterhin soll das zum Anzünden im Schubkasten gemachte Feuer durch den zwischen den Gitterrosten gebildeten freien Raum nach oben brennen und die Brennstoffteilchen gleichmäßig erreichen können.

Ähnlich aufgebaute Grillgeräte sind aus der US 3 911 892 A, aus der US 4 133 335 A, aus der US 2006 144 383 A1 sowie aus der US 2007 044 785 A1 bekannt.

Ein relativ einfach aufgebautes Grillgerät mit einer oberseitig offenen Brennstoffschale, die für die Anzündphase vertikal aufstellbar ist und deren offenen Oberseite mit einem Deckel verschließbar ist, ist aus der US 3 717 137 A bekannt. In der vertikal stehenden Anzündstellung ist die obere Schmalseite der in dieser Anzündstellung umseitig geschlossenen Brennstoffschale als gelochter Deckel ausgebildet, so dass die Hitze nach oben abziehen kann. Die in der Anzündstellung nach unten weisende Bodenseite der Brennstoffschale weist ebenfalls Löcher auf. Unterhalb der Bodenseite befindet sich ein beidseitig zugänglicher schmaler Raum zur Aufnahme von Anzündern. Zum Entzünden der in der Brennstoffschale befindlichen Holzkohle werden die unterhalb der Bodenseite der Brennstoffschale befindlichen Anzünder eingesetzt, wonach durch den Kamineffekt mit einem schnellen Entzünden und Erhitzen der in der Brennstoffschale befindlichen Holzkohle zu rechnen ist. Sobald die Holzkohle erhitzt ist, kann die Brennstoffschale durch Verschwenken innerhalb eines Stützrahmens in eine flache Garstellung gebracht und der oberseitige Deckel abgenommen und durch einen Grillrost ersetzt werden, so dass das Gargut gegrillt und gegart werden kann.

Bei einem weiteren bekannten portablen Grillgerät sollen ein geringer Platzbedarf, eine leichte Transportierbarkeit und eine unmittelbare Einsatzbereitschaft im Vordergrund stehen. So schlägt die europäische Patentschrift EP 3 342 320 B1 ein portables Grillgerät mit zwei ineinander einschiebbaren Gehäuseelementen vor, wobei eines der Gehäuseelemente den Brennstoff aufnehmen soll. Im ineinandergeschobenen Zustand der beiden Gehäuseelemente, bei dem das Grillgerät eine Minimalgröße einnehmen soll, kann es in einem Tagesrucksack oder in einem Stoffbeutel transportiert werden, während es im auseinandergezogenen Zustand, der ggf. arretierbar sein kann, auf das mindestens anderthalbfache seiner Minimalgröße vergrößert sein soll.

Aus der CH 377 505 A ist zudem ein Grill mit zwei parallel zueinander orientierten Gitterflächen bekannt. Die Gitterflächen bilden eine Aufnahme für Brennstoff. An der Aufnahme sind mehrere Flügel gelenkig befestigt. Der Grill kann gedreht und in unterschiedlichen Positionen aufgestellt werden.

Angesichts der aus dem Stand der Technik bekannten Grillgeräte kann es als vorrangiges Ziel der vorliegenden Erfindung betrachtet werden, ein portables und im Transportzustand wenig Stauraum einnehmendes Grillgerät zur Verfügung zu stellen, dessen Festbrennstoff schnell und effektiv entzündet und in glühenden Zustand überführt werden kann.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen.

So schlägt die Erfindung zur Erreichung des oben genannten Ziels ein portables Grillgerät mit einer trogartigen oder quaderförmigen Brennstoffschale vor, die eine Bodenfläche und eine umlaufende Mantelfläche aufweist, wobei eine der Bodenfläche insbesondere in paralleler Anordnung gegenüberliegende und sich an die Mantelfläche anschließende Oberseite der Brennstoffschale in einer ersten Betriebslage des Grillgerätes offen und/oder durch einen an der Mantelfläche anliegenden oder von dieser beabstandeten Grillrost bedeckt ist, während die Oberseite in einer zweiten Betriebslage des Grillgerätes durch eine an der trogartigen Brennstoffschale fixierbare Deckelfläche bedeckt und zumindest teilweise verschlossen ist.

An einer ersten Seite der umlaufenden Mantelfläche befindet sich eine erste Verschlussplatte, die bei aufrecht stehender Brennstoffschale mit zu einem Untergrund in etwa vertikal stehenden Bodenfläche und Deckelfläche und sich dabei in der zweiten Betriebslage befindlichem Grillgerät, bei dem die Deckelfläche an der Mantelfläche fixiert ist, einen auf einem Untergrund stehenden Stützfuß und bei flach liegender Brennstoffschale einen von zwei Auflagefüßen bildet.

An einer zweiten Seite der umlaufenden Mantelfläche, die der ersten Seite mit der daran angeordneten ersten Verschlussplatte gegenüberliegt, ist eine zweite Verschlussplatte fixierbar, die bei flach liegender Brennstoffschale mit zum Untergrund in etwa parallel stehender Bodenfläche und sich dabei in der ersten Betriebslage befindlichem Grillgerät, bei dem die Deckelfläche entfernt und/oder durch den Grillrost ersetzt ist, den zweiten Auflagefuß bildet, wobei die beiden gegenüberliegenden Auflagefüße mit randseitigen Kanten jeweils auf dem Untergrund stehen.

Außerdem können die Bodenfläche und/oder die von der Brennstoffschale lösbare und dort fixierbare Deckelfläche und/oder Abschnitte der Mantelfläche der Brennstoffschale jeweils Durchbrüche zur Verbrennungsluftzufuhr und/oder zur Wärmeabfuhr bei in der Brennstoffschale befindlichem entzündetem Brennstoff aufweisen.

Die trogartige oder quaderförmige Brennstoffschale weist darüber hinaus mindestens eine zur Bodenfläche in etwa senkrechte Trennwand auf, deren Längserstreckungsrichtung in etwa senkrecht zur ersten Seite der Mantelfläche mit der daran befindlichen ersten Verschlussplatte sowie in etwa senkrecht zur gegenüberliegenden zweiten Seite der Mantelfläche mit der daran fixierbaren zweiten Verschlussplatte verläuft.

Bei dem erfindungsgemäßen portablen Grillgerät ist die flach liegende Brennstoffschale, deren Mantelseiten vertikal ausgerichtet oder sich leicht trichterförmig nach außen öffnen, in der ersten Betriebslage des Grillgerätes oberseitig durch den an der Mantelfläche anliegenden oder von dieser beabstandeten Grillrost bedeckt.

Wenn an dieser Stelle von vertikal ausgerichteten Mantelseiten oder von sich leicht trichterförmig nach außen öffnenden Mantelseiten die Rede ist, so können diese Optionen auch miteinander kombiniert werden. D.h. einzelne Seitenflächen können bspw. in einem Winkel von ca. 90° zur Bodenfläche stehen, während andere Seitenflächen z.B. einen Öffnungswinkel von mehr als 90° aufweisen, wobei ein sinnvoller Öffnungswinkel bspw. von 91° bis etwa 105° oder auch etwas mehr reichen kann.

Die Ecken der Mantelseiten, an denen die Seitenflächen normalerweise in Winkeln von jeweils 90° aneinandergrenzen, können wahlweise gekantet und damit nur schwach verrundet sein. Denkbar sind jedoch auch etwas größere Verrundungsradien von bspw. ca. 5 mm oder mehr, was ggf. eine optisch vorteilhafte Wirkung erzeugen kann. Zudem ist die Reinigung der Brennstoffschale erleichtert, wenn die Kanten zu den Mantelflächen und/oder die Kanten der aneinanderstoßenden Mantelseiten verrundet sind.

Es kann sein, dass die trogartige Brennstoffschale insbesondere in Eckbereich und/oder im Bereich der mindestens einen Trennwand Verstärkungen aufweist, um eine Verformung der trogartigen Brennstoffschale bei einer Abkühlung entgegenzuwirken. Die Verstärkungen können beispielsweise durch Kantungen in der trogartigen Brennstoffschale und/oder durch Sicken ausgebildet sein. Alternativ oder ergänzend hierzu kann die von der trogartigen Brennstoffschale lösbare und dort fixierbare Deckelfläche solche Verstärkungen aufweisen.

Zudem ist bei dem erfindungsgemäßen portablen Grillgerät in der zweiten Betriebslage des Grillgerätes die im Wesentlichen vertikal stehende Brennstoffschale an ihrer Frontseite und Rückseite verschlossen, wobei die Rückseite in dieser zweiten Betriebslage die nun aufrecht stehende Bodenseite ist, während die Frontseite die mit der Deckelfläche verschlossene aufrecht stehende Oberseite der Brennstoffschale ist. Deren Unterseite und Oberseite sind in dieser zweiten Betriebslage jeweils in etwa vertikal ausgerichtet.

Wahlweise können die beiden an den stirnseitigen Rändern befestigbaren Verschlussplatten in etwa gleiche Abmessungen aufweisen. D.h. sie können typischerweise in etwa gleich groß sein bzw. jeweils gleiche Grundrisse aufweisen.

Wahlweise kann ein erster stirnseitiger Rand der Mantelfläche, der das Innenvolumen der Brennstoffschale an einer zur ersten Verschlussplatte weisenden ersten Stirnseite begrenzt, mit Durchbrüchen zur Verbrennungsluftzufuhr versehen sein. In der zweiten Betriebslage ist dieser erste stirnseitige Rand der nach unten weisende stirnseitige Rand der Brennstoffschale. Außerdem kann es von Vorteil sein, wenn der erste bzw. untere stirnseitige Rand der Mantelfläche beabstandet von der ihm am nächsten liegenden Umrisskante der Bodenfläche ist, so dass er gegenüber den längsseitigen Rändern der Mantelfläche in einer Richtung zum gegenüberliegenden zweiten stirnseitigen Rand, an dem die zweite Verschlussplatte montierbar ist, zurückversetzt ist.

Auf diese Weise ist zwischen der ersten Verschlussplatte und dem ersten bzw. unteren stirnseitigen Rand ein Hohlraum zur Belüftung der Brennstoffschale durch den mit Durchbrüchen versehenen ersten stirnseitigen Rand und zur Frischluft- und/oder Verbrennungsluftzufuhr der mit entzündetem Brennstoff gefüllten Brennstoffschale gebildet. Dieser Hohlraum befindet sich bei aufgesetzter Deckelplatte und in zweiter Betriebslage befindlichem Grillgerät im unteren Bereich bzw. an der Unterseite der Brennstoffschale. Vorzugsweise kann der Hohlraum seitlich offen sein und über mindestens einen Durchbruch im Bereich der längsseitigen Ränder verfügen, wobei der Hohlraum insbesondere beidseitig offen sein kann.

Wenn bei dem portablen Grillgerät außerdem der zweite bzw. obere stirnseitige Rand bei abgenommener zweiter Verschlussplatte weitgehend offen ist, kann zum Anzünden und schnellen Ausbreiten der Flammenfront im entzündeten Brennstoff ein Kamineffekt genutzt werden, da die Frischluft bei aufrecht stehender Brennstoffschale, bei dem sich das Grillgerät in der zweiten Betriebslage befindet, durch die Durchbrüche in den unten befindlichen Hohlraum einströmen und von dort in die Brennstoffschale eintreten kann.

Bei einer weiteren Ausführungsvariante des portablen Grillgerätes kann zudem die trogartige Brennstoffschale zwei oder mehr zu den beiden gegenüberliegenden längsseitigen Rändern der Mantelfläche in etwa parallel und zur flachen Bodenseite in etwa senkrecht orientierte Trennwände aufweisen. Wahlweise können auch mehrere solcher Trennwände vorgesehen sein, so dass durch die Trennwände mehrere Abteilungen innerhalb der Brennstoffschale gebildet sind.

Vorzugsweise kann die Trennwand oder können die zwei oder mehr Trennwände in etwa gleiche Abstände voneinander sowie von den hierzu parallelen Seitenwänden der Mantelfläche aufweisen und somit die trogartige Brennstoffschale in zwei, drei vier oder mehr kanalartige Brennstoffkammern unterteilen.

Es sind somit mehrere voneinander getrennte Kanäle oder Brennstoffkammern gebildet, die jeweils mit Holzkohlestücken und Grillanzündern gefüllt sein können, so dass bei in zweiter Betriebslage befindlichem Grillgerät mit aufrecht stehender Brennstoffschale vertikal verlaufende Brennstoffkammern gebildet sind, die unterseitig über den Hohlraum belüftet und mit Frischluft als Verbrennungsluft versorgt werden, und die oberseitig offen sind, so dass die heiße Luft, die Verbrennungsabgase sowie der entstehende Rauch nach oben abziehen können. Der hierdurch erzeugte Kamineffekt sorgt für ein schnelles Ausbreiten der Flammenfront, für eine schnelle und gleichmäßige Entzündung des meist durch Holzkohlestücke gebildeten Festbrennstoffes und für ein gleichmäßiges Durchglühen der Holzkohlestücke, so dass das Grillgerät nach dieser Anzündphase auch schnell seinem bestimmungsgemäßen Gebrauch als Gargerät zugeführt werden kann, wozu es um 90° umgelegt und in die erste Betriebslage überführt wird.

Bewährt hat es sich beispielsweise, wenn das portable Grillgerät ein insbesondere als Grillzange ausgebildetes Greifgerät umfasst, über welches insbesondere als Grillzange ausgebildete Greifgerät die trogartige Brennstoffschale und/oder die zweite Verschlussplatte gegriffen, hierauf um 90° umgelegt und in die erste Betriebslage überführt wird. Über das insbesondere als Grillzange ausgebildete Greifgerät kann auf das sodann in die erste Betriebslage überführte Grillgerät nachfolgend Grillgut auf einen Grillrost aufgelegt werden, welcher Grillrost hierzu vorhergehend in die erste Verschlussplatte und in die zweite Verschlussplatte des bereits in die erste Betriebslage gebrachten portablen Grillgerätes jeweils eingehängt wurde.

Der erste stirnseitige Rand, der sich bei der zweiten Betriebslage des Grillgerätes unten befindet, kann vorzugsweise mehrere Durchbrüche aufweisen, die jeweils im Bereich der zwei, drei oder mehr kanalartigen Brennstoffkammern angeordnet sind. Die Durchbrüche können sich bspw. jeweils mittig oder mittig fluchtend zu den Längsmittelachsen der jeweiligen kanalartigen Brennstoffkammern befinden.

Da außerdem die Bodenfläche mehrere Durchbrüche aufweisen kann, die in etwa gleichen Abständen voneinander mittig entlang der kanalartigen Brennstoffkammern verlaufen, kann auch bei flach liegender Brennstoffschale, bei der sich das Grillgerät in der ersten Betriebslage befindet, ausreichend frische Verbrennungsluft von unten her in die Brennstoffschale nachströmen und den dort befindlichen Brennstoff während der weiteren Garphase mit Frischluft versorgen. Die flache Bodenseite der Brennstoffschale weist vorzugsweise runde oder schlitzartige längliche Durchbrüche zum Hohlraum hin auf; wahlweise kann auch die flache Deckelseite mehrere Durchbrüche zum Hohlraum hin aufweisen, wobei weitere Durchbrüche im Bereich der kanalartigen Brennstoffkammern nicht notwendig oder sinnvoll sind.

Allerdings sollte darauf geachtet werden, dass die Durchbrüche oder Löcher in der Bodenplatte nicht zu groß gewählt werden, um nicht den Kamineffekt zu stören oder - bei zu groß gewählten Löchern - gar zunichte zu machen. Aus diesem Grund kann es trotz der ungünstigeren Belüftungssituation der in der ersten Betriebslage befindlichen Brennstoffschale mit auf dem Grillrost liegendem Gargut sinnvoll sein, bei der Bodenfläche, Bodenplatte oder flachen Bodenseite völlig auf Durchbrüche zu verzichten.

Unter Umständen können sehr kleine Bohrungen die gewünschte Frischluftzufuhr liefern, ohne den Kamineffekt bei in zweiter Betriebslage befindlicher Brennstoffschale zu stark zu stören oder negativ zu beeinflussen. Die Durchmesser solcher Bohrungen dürften in einem sinnvollen Bereich von weniger als 2 mm liegen, vorzugsweise aber noch kleiner gewählt werden.

Typischerweise sind die erste Verschlussplatte und die zweite Verschlussplatte jeweils geschlossen, so dass sie die ersten bzw. zweiten Stirnseiten an der Mantelfläche der Brennstoffschale zumindest annähernd abschließen können.

Außerdem können die erste Verschlussplatte und die zweite Verschlussplatte jeweils an ihren den äußeren randseitigen Kanten der Mantelfläche gegenüberliegende Auflagestege o. ä. zur Auflage eines Grillrostes aufweisen. Auf diese Weise sind bei in erster Betriebslage befindlichem liegendem Grillgerät mehrere Höhenpositionen für die Auflage des Grillrostes ermöglicht, was für die Nutzung verschiedener Temperaturniveaus beim Garen des Grillgutes von Vorteil sein kann.

Es kann demnach sein, dass die erste Verschlussplatte und die zweite Verschlussplatte derart ausgebildet sind, dass der Grillrost in der ersten Betriebslage in mehreren unterschiedlichen Höhenniveaus an der ersten Verschlussplatte und an der zweiten Verschlussplatte angeordnet werden kann. Bewährt hat es sich auch, wenn in die erste Verschlussplatte und in die zweite Verschlussplatte zum Ausbilden der mehreren unterschiedlichen Höhenniveaus jeweils mehrere Schlitze eingebracht sind.

Eine weitere Option des portablen Grillgerätes kann vorsehen, dass die Verschlussplatten an einer von beiden vertikalen Schmalseiten jeweils Aufnahmen, Halteschienen o. dgl. zum Einschub der von der Brennstoffschale abgenommenen Deckelfläche aufweist. Diese Deckelfläche kann bei liegendem Grillgerät senkrecht stehend montiert werden und solchermaßen an der Rückseite des Grillgerätes eine Windschutzplatte bilden.

Auch kann das portable Grillgerät einen Einsatz umfassen, der vorzugsweise als Raclette-Pfanne ausgebildet ist. Bei dem portablen Grillgerät kann es sein, dass der Einsatz in der ersten Betriebslage lösbar an der ersten Verschlussplatte und an der zweiten Verschlusspatte und/oder lösbar an der Deckelfläche angeordnet werden kann, so dass sich der Einsatz hierbei unterhalb der trogartigen Brennstoffschale befindet. Alternativ oder ergänzend hierzu kann es sein, dass der Einsatz in der ersten Betriebslage lösbar an der Deckelfläche angeordnet werden kann, welche Deckelfläche bei liegendem Grillgerät senkrecht stehend montiert ist, wobei sich der lösbar an der Deckelfläche angeordnete Einsatz hierbei unterhalb der trogartigen Brennstoffschale befindet.

Zur Erreichung des oben genannten Ziels schlägt die Erfindung weiterhin ein Verfahren zur Handhabung und/oder Verwendung eines portablen Grillgerätes gemäß einer der oben beschriebenen Ausführungsvarianten oder einer Kombination mehrerer der beschriebenen Ausführungsvarianten vor. Wie oben bereits definiert, weist das portable Grillgerät eine trogartige oder quaderförmige Brennstoffschale mit einer Bodenfläche und einer umlaufenden Mantelfläche auf.

Bei dem erfindungsgemäßen Verfahren kann das Grillgerät aus einer ersten Betriebslage, bei der die Brennstoffschale eine liegende Anordnung mit nach unten weisender Bodenfläche einnimmt, und bei der eine der Bodenfläche insbesondere in paralleler Anordnung gegenüberliegende und sich an die Mantelfläche anschließende Oberseite der Brennstoffschale offen und/oder durch einen an der Mantelfläche anliegenden oder von dieser beabstandeten Grillrost bedeckt ist, in eine zweite Betriebslage, bei der die Brennstoffschale eine aufrecht stehende Anordnung einnimmt, und bei der die Oberseite durch eine an der trogartigen Brennstoffschale fixierbare Deckelfläche bedeckt und zumindest teilweise verschlossen ist, gebracht werden.

Wahlweise kann bei dem erfindungsgemäßen Verfahren das Grillgerät auch aus seiner zweiten Betriebslage, bei der die Brennstoffschale eine aufrecht stehende Anordnung einnimmt, und bei der die Oberseite durch eine an der trogartigen Brennstoffschale fixierbare Deckelfläche bedeckt und zumindest teilweise verschlossen ist, in die erste Betriebslage, bei der die Brennstoffschale eine liegende Anordnung mit nach unten weisender Bodenfläche einnimmt, und bei der eine der Bodenfläche insbesondere in paralleler Anordnung gegenüberliegende und sich an die Mantelfläche anschließende Oberseite der Brennstoffschale offen und/oder durch einen an der Mantelfläche anliegenden oder von dieser beabstandeten Grillrost bedeckt ist, gebracht werden.

Bei dem Verfahren kann weiterhin vorgesehen sein, dass an einer ersten Seite der umlaufenden Mantelfläche der Brennstoffschale eine erste Verschlussplatte angebracht werden kann bzw. angebracht wird, die bei aufrecht stehender Brennstoffschale mit zu einem Untergrund in etwa vertikal stehenden Bodenfläche und Deckelfläche und sich dabei in der zweiten Betriebslage befindlichem Grillgerät, bei dem die Deckelfläche an der Mantelfläche fixiert ist, einen auf einem Untergrund stehenden Stützfuß bildet.

Zudem kann wahlweise an einer zweiten Seite der umlaufenden Mantelfläche, die der ersten Seite mit der daran angeordneten ersten Verschlussplatte gegenüberliegt, eine zweite Verschlussplatte fixiert werden, die bei flach liegender Brennstoffschale mit zum Untergrund in etwa parallel stehender Bodenfläche und sich dabei in der ersten Betriebslage befindlichem Grillgerät, bei dem die Deckelfläche entfernt und/oder durch den Grillrost ersetzt ist, den zweiten Auflagefuß bildet, wobei die beiden gegenüberliegenden Auflagefüße mit randseitigen Kanten jeweils auf dem Untergrund stehen.

Das Verfahren kann zur Vorbereitung des portablen Grillgerätes vorsehen, dass die Brennstoffschale mit abgenommener Deckelfläche und abgenommenen Verschlussplatten mit Brennstoffportionen und mit Feststoff-Anzündern oder Feststoff-Brandbeschleunigern o. dgl. bestückt wird, die in die zwei, drei vier oder mehr kanalartige Brennstoffkammern eingelegt werden, die durch Unterteilung der Brennstoffschale mittels der Trennwände gebildet sind.

Sinnvollerweise werden die Feststoff-Anzünder oder Feststoff-Brandbeschleuniger o. dgl. jeweils in jede der kanalartigen Brennstoffkammern in Bereiche eingelegt, an denen sich Durchbrüche zur Verbrennungsluftzufuhr und/oder zur Wärmeabfuhr bei in der Brennstoffschale befindlichem entzündetem Brennstoff in der Bodenfläche und/oder in der Mantelfläche befinden.

Nach dem Befüllen der Brennstoffschale mit Brennstoffportionen und mit Anzünder oder Brandbeschleuniger kann die Deckelfläche auf dem oberseitigen Rand der Mantelfläche der Brennstoffschale fixiert werden, wodurch die Brennstoffschale allseitig verschlossen wird.

Wenn außerdem die erste Verschlussplatte an der ersten Seite des Grillgerätes fixiert und die Brennstoffschale in die aufrecht stehende zweite Betriebslage gebracht wurde, können die Anzünder und der Brennstoff entzündet werden, wobei eine Frischluftzufuhr durch die näher am Stützfuß befindlichen Durchbrüche in/an der Brennstoffschale von unten erfolgt und die Abgas- und Wärmeabfuhr unter Ausbildung eines Kamineffektes durch die nach oben weisende Öffnung an der zweiten Seite der Mantelfläche erfolgt.

Während beim Anzünden und beim Beginn des Brennvorganges die zweite Verschlussplatte entfernt ist, so dass die Abgase und der Rauch durch die dadurch freigelassene obere Öffnung in der Mantelfläche der Brennstoffschale abziehen können, wird anschließend die zweite Verschlussplatte an die Brennstoffschale angefügt. Zudem kann das Grillgerät in seine erste Betriebslage gebracht werden, nachdem der Brennstoff seine vorgesehene Gartemperatur erreicht hat. Hierzu kann ein insbesondere als Grillzange ausgebildetes Greifgerät vorgesehen sein, über welches die bis dahin in der zweiten Betriebslage befindliche trogartige Brennstoffschale und/oder die bereits an die trogartige Brennstoffschale angefügte zweite Verschlussplatte gegriffen wird und das portable Grillgerät sodann mittels des insbesondere als Grillzange ausgebildeten Greifgerätes aus der zweiten Betriebslage in die erste Betriebslage gedreht wird. Da ein Benutzer das Grillgerät bei solchen Ausführungsformen somit nicht unmittelbar berühren muss, um das Grillgerät aus der zweiten Betriebslage in die erste Betriebslage zu schwenken, besteht kein Risiko einer Verletzung des Benutzers durch Verbrennungen.

Vor oder nach einem Überführen des portablen Grillgerätes aus der zweiten Betriebslage in die erste Betriebslage kann auch die Deckelfläche von der Brennstoffschale abgenommen und durch einen Grillrost ersetzt werden, der an hierfür vorgesehenen Einschüben an den Verschlussplatten positioniert wird. Die zu garenden Speisen können dann auf den Grillrost gelegt werden. Wahlweise kann die Deckelfläche in senkrechter Stellung an der Rückseite der Brennstoffschale fixiert werden, um solchermaßen als Windschutz zu fungieren. So kann etwa vorgesehen sein, dass die Deckelfläche in vertikaler Position als Windschutz unter Anlage an einer der Mantelseiten zwischen die Verschlussplatten eingefügt wird. Bewährt hat es sich auch, wenn die Deckelfläche in die trogartige Brennstoffschale und/oder in die Verschlussplatten hierzu eingehängt wird.

Das weitere Verfahren kann vorsehen, dass das Grillgerät nach erfolgtem Garen von Speisen und nach teilweise verbranntem Brennstoff nach Abnahme des Grillrostes, nach Abnahme der zweiten Verschlussplatte von der Brennstoffschale und nach Aufsetzen der Deckelfläche auf die zuvor mit dem Grillrost bedeckte offene Seite der Brennstoffschale wieder in die aufrecht stehende zweite Betriebslage gebracht wird, um als Brennofen zu fungieren. Die einzelnen Schritte, welche zum Überführen bzw. Rücküberführen des portablen Grillgerätes aus der ersten Betriebslage in die zweite Betriebslage durchgeführt werden, können in der nachfolgend dargestellten Reihenfolge erfolgen:
- Abnahme des Grillrostes von der trogartigen Brennstoffschale;
- Aufsetzen der Deckelfläche auf die zuvor mit dem Grillrost bedeckte offene Seite der Brennstoffschale;
- Drehen bzw. Umlegen des portablen Grillgerätes aus der ersten Betriebslage in die zweite Betriebslage;
- Abnahme der bis dahin an der trogartigen Brennstoffschale befestigten zweiten Verschlussplatte von der trogartigen Brennstoffschale.

Zum Drehen bzw. Umlegen des portablen Grillgerätes aus der ersten Betriebslage in die zweite Betriebslage kann die an der portablen Brennstoffschale befestigte zweite Verschlussplatte über ein insbesondere als Grillzange ausgebildetes Greifgerät gegriffen und zusammen mit der trogartigen Brennstoffschale um 90° gedreht bzw. umgelegt werden.

Bei dieser abschließenden Nutzung kann in die oben offene zweite Seite bei abgenommener zweiten Verschlussplatte des in zweiter Betriebslage aufrechtstehenden Grillgerätes weiterer Brennstoff in Gestalt von Holz, Stöcken, Ästen etc. eingefügt werden, damit diese Holzstücke mit offener Flamme verbrennen und Verbrennungswärme erzeugen können, was besonders nach dem Grillen willkommen sein kann.

Nachfolgend sollen nochmals diverse Aspekte beschrieben werden, wie sie bei diversen Ausführungsformen des erfindungsgemäßen Grillgerätes sowie in diversen Ausführungsformen des erfindungsgemäßen Verfahrens vorgesehen sein können, wobei die nachfolgende Beschreibung als nicht einschränkend für die Erfindung zu verstehen ist und zur weiteren Verdeutlichung dient.

Es kann bei dem Verfahren vorgesehen sein, dass Holzwolle-Portionen zunächst in mehrere kanalartige Brennstoffkammern eingelegt werden, die durch Unterteilung der Brennstoffschale mittels mehrerer Trennwände gebildet sind, die sich zwischen randseitigen Wänden und Längsseiten der Mantelfläche befinden. Bei der Brennstoffschale kann hierbei eine Deckelfläche zunächst abgenommen sein. Auch können Verschlussplatten hierbei noch nicht an die Brennstoffschale angefügt sein.

Weiter können die kanalartigen Brennstoffkammern nach dem Einlegen der Feststoff-Anzünder jeweils mit Brennstoffportionen in Form von Eierbriketts passender Größe befüllt werden. Jeder Kanal kann sodann jeweils eine Holzwolle-Portion sowie daran anschließende Eierbriketts aufnehmen.

Zudem können sich in der Bodenfläche und/oder in einer Mantelfläche der Brennstoffschale und/oder in einer Deckelfläche mehrere Durchbrüche befinden, die jeweils mittig entlang der kanalartigen Brennstoffkammern verlaufen, und die der Verbrennungsluftzufuhr und/oder der Wärmeabfuhr bei in der Brennstoffschale befindlichem entzündetem Brennstoff dienen.

Auch kann es sein, dass Bohrungen eine gewünschte Frischluftzufuhr liefern, ohne den Kamineffekt bei in zweiter Betriebslage befindlicher Brennstoffschale zu stark zu stören oder negativ zu beeinflussen. Die Durchmesser solcher Bohrungen können in einem sinnvollen Bereich von weniger als 2 mm liegen, vorzugsweise aber noch kleiner gewählt werden. Bewährt haben sich in der Praxis allerdings Ausführungsformen, bei welchen Schlitze eine gewünschte Frischluftzufuhr liefern, ohne den Kamineffekt bei in zweiter Betriebslage befindlicher Brennstoffschale zu stark zu stören oder negativ zu beeinflussen.

Weiter kann nach dem Befüllen der Brennstoffschale mit Brennstoffportionen und mit Anzünder oder Brandbeschleuniger ggf. die Deckelfläche auf dem oberseitigen Rand der Mantelfläche der Brennstoffschale fixiert werden, wodurch die Brennstoffschale allseitig verschlossen wird.

Darüber hinaus kann es sein, dass die Deckelfläche ggf. in schlitzartige Aufnahmen an den zu den Längsseiten quer stehenden Stirnseiten der Brennstoffschale aufgesetzt und eingeschoben wird.

Die Deckelfläche kann jeweils Durchbrüche in den Bereichen der kanalartigen Brennstoffkammern aufweisen, in denen sich die Feststoff-Anzünder befinden. Diese können dadurch leicht von außen entzündet werden. Außerdem dienen die Durchbrüche der Frischluftzufuhr, sobald die Feststoff-Anzünder entzündet sind und allmählich die Holzkohlebriketts in Brand setzen.

Anstelle der Einschubmöglichkeit kann die Deckelfläche ggf. auch anderweitig auf die Brennstoffschale aufgesetzt und dort fixiert werden, so beispielsweise mittels magnetischer Verbindungen, mittels geeigneter Rastverbindungen oder dergleichen mehr.

Weiter kann es sein, dass die fertig vorbereitete und mit Anzünder sowie mit Brennstoff bestückte Brennstoffschale für einen Transport verpackt wird, beispielsweise mit einer Kunststofftüte und/oder in einem Stoffbehältnis oder Stoffsack, so dass die Brennstoffschale mitsamt weiteren Zubehörteilen zu ihrem Einsatzort transportiert werden kann. Dort kann die Brennstoffschale wieder aus dem Stoffbeutel entnommen und auf die am Boden oder auf einem beliebigen Untergrund liegende Verschlussplatte aufgesetzt werden, was beispielsweise durch seitliches Aufschieben oder Einhängen erfolgen kann.

Werden nun ggf. die als unterer Stützfuß fungierende erste Verschlussplatte an der ersten Seite der Brennstoffschale bzw. des Grillgerätes fixiert und die Brennstoffschale in die aufrecht stehende zweite Betriebslage gebracht, können die Anzünder und der Brennstoff entzündet werden, wobei eine Frischluftzufuhr durch die näher am Stützfuß befindlichen Durchbrüche in/an der Brennstoffschale von unten erfolgt und die Abgas- und Wärmeabführ unter Ausbildung eines Kamineffektes durch die nach oben weisende Öffnung an der zweiten Seite der Mantelfläche erfolgen kann.

Während beim Anzünden und beim Beginn des Brennvorgangs die zweite Verschlussplatte ggf. entfernt ist, so dass die Abgase und der Rauch durch die dadurch freigelassene obere Öffnung in der Mantelfläche der Brennstoffschale abziehen können, wird anschließend ggf. die zweite Verschlussplatte an die Brennstoffschale angefügt. Die Montage der zweiten Verschlussplatte kann auf die gleiche Weise wie bei der ersten Verschlussplatte erfolgen.

Zudem kann das Grillgerät in seine erste Betriebslage gebracht werden, nachdem der Brennstoff seine vorgesehene Gartemperatur erreicht hat. Während die Brennstoffschale in der zweiten Betriebslage aufrecht steht und der Brennstoff entzündet werden kann, liegt die Brennstoffschale ggf. in der ersten Betriebslage mit ihrer Bodenseite über dem Untergrund, wobei die beiden Verschlussplatten als Stützfüße dienen. Hierbei kann auch die Deckelfläche von der Brennstoffschale abgenommen, ggf. beiseite gelegt und durch einen Grillrost ersetzt werden, der an hierfür vorgesehenen Einschüben an den Verschlussplatten positioniert wird. Die zu garenden Speisen können dann auf den Grillrost gelegt werden.

Wahlweise kann die Deckelfläche in senkrechter Stellung an der Rückseite der Brennstoffschale fixiert werden, um solchermaßen als Windschutz zu fungieren. So kann etwa vorgesehen sein, dass die Deckelfläche in vertikaler Position als Windschutz unter Anlage an einer der Mantelseiten zwischen die Verschlussplatten eingefügt wird. Auch kann es sein, dass das Grillgerät ein geeignetes Werkzeug wie beispielsweise eine Grillzange zum Abziehen der Deckelfläche und zu deren weiterer Handhabung beim Einsetzen als Windschutz umfasst. Denkbar ist auch, dass die Deckelfläche in vertikaler Position als Windschutz unter Anlage an einer der Mantelseiten in die trogartige Brennstoffschale eingehängt wird.

Das weitere Verfahren kann vorsehen, dass das Grillgerät nach erfolgtem Garen von Speisen und nach teilweise verbranntem Brennstoff, nach Abnahme des Grillrostes, nach optionaler Abnahme der Deckelfläche von der Rückseite, nach Wiedereinsetzen oder Wiedereinschieben der Deckelfläche als Verschluss für die zuvor offene Oberseite der Brennstoffschale in die senkrecht zweite Betriebslage gebracht werden kann bzw. wird, um nach Abnahme der zweiten Verschlussplatte von der Brennstoffschale als Brennofen fungieren zu können. Bei dieser abschließenden Nutzung kann ggf. in die offene zweite Seite bei abgenommener zweiten Verschlussplatte des in der zweite Betriebslage aufrecht stehenden Grillgerätes weiterer Brennstoff in Gestalt von Holz, Stöcken, Ästen etc. eingefügt werden, damit diese Holzstücke mit offener Flamme verbrennen und Verbrennungswärme erzeugen können, was besonders nach dem Grillen willkommen sein kann.

Es sei an dieser Stelle ausdrücklich erwähnt, dass alle Aspekte und Ausführungsvarianten, die im Zusammenhang mit dem erfindungsgemäßen portablen Grillgerät erläutert wurden, gleichermaßen Teilaspekte des erfindungsgemäßen Verfahrens zur Handhabung, zur Nutzung und zu seiner Verwendung betreffen oder bilden können. Wenn daher an einer Stelle bei der Beschreibung oder auch bei den Anspruchsdefinitionen zum erfindungsgemäßen portablen Grillgerät von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte des erfindungsgemäßen portablen Grillgerätes betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für das erfindungsgemäße Grillgerät.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Explosionsdarstellung einer Ausführungsform eines erfindungsgemäßen Grillgerätes.
Fig. 2 zeigt eine schematische Perspektivansicht einer Ausführungsform einer Brennstoffschale, wie sie bei diversen Ausführungsformen eines erfindungsgemäßen Grillgeräts vorgesehen sein kann.
Figuren 3a und 3b verdeutlichen eine zweite Betriebslage, in welche das Grillgerät gebracht werden kann.
Fig. 4 zeigt eine Deckelfläche, wie sie bei diversen Ausführungsformen eines erfindungsgemäßen Grillgerätes vorgesehen sein kann.
Fig. 5 zeigt einen Grillrost, wie er bei diversen Ausführungsformen eines erfindungsgemäßen Grillgerätes vorgesehen sein kann.
Figuren 6 und 7 zeigen einzelne Bestandteile der tragartigen Brennstoffschale aus dem Ausführungsbeispiel nach Fig. 2.
Fig. 8 zeigt einen Einsatz, wie er bei diversen Ausführungsformen eines erfindungsgemäßen Grillgerätes vorgesehen sein kann.
Figuren 9 und 10 zeigen jeweils eine schematische Perspektivansicht der Ausführungsform der ersten Verschlussplatte des Ausführungsbeispiels eines Grillgerätes nach Fig. 1.
Fig. 11 zeigt eine schematische Perspektivansicht der Ausführungsform der zweiten Verschlussplatte des Ausführungsbeispiels eines Grillgerätes nach Fig. 1.
Fig. 12 zeigt eine Ausführungsform eines Grillgerätes, welches in eine erste Betriebslage gebracht wurde.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur oder Zeichnung erforderlich sind. Die dargestellten Ausführungsformen stellen lediglich Beispiele dar, wie die Erfindung ausgestaltet sein kann und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

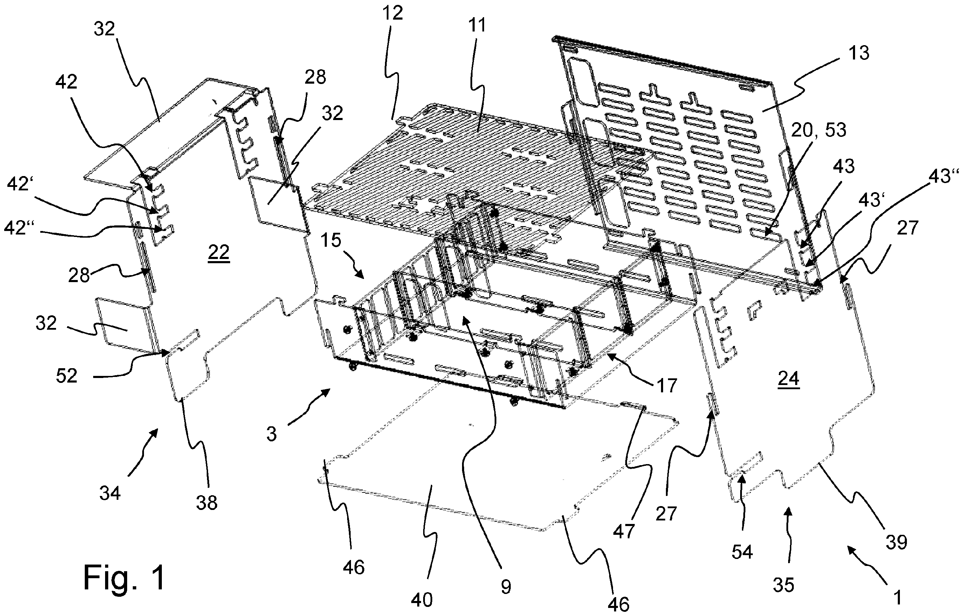

Die Fig. 1 zeigt eine schematische Explosionsdarstellung einer Ausführungsform eines erfindungsgemäßen Grillgerätes 1. Bei dem Grillgerät 1 handelt es sich um ein portables Grillgerät 1, so dass das Grillgerät 1 eine Dimension besitzt, mit welcher das Grillgerät 1 beispielsweise in einer Tasche oder in einem Rucksack verstaut werden kann, um an einen jeweiligen Einsatzort transportiert zu werden.

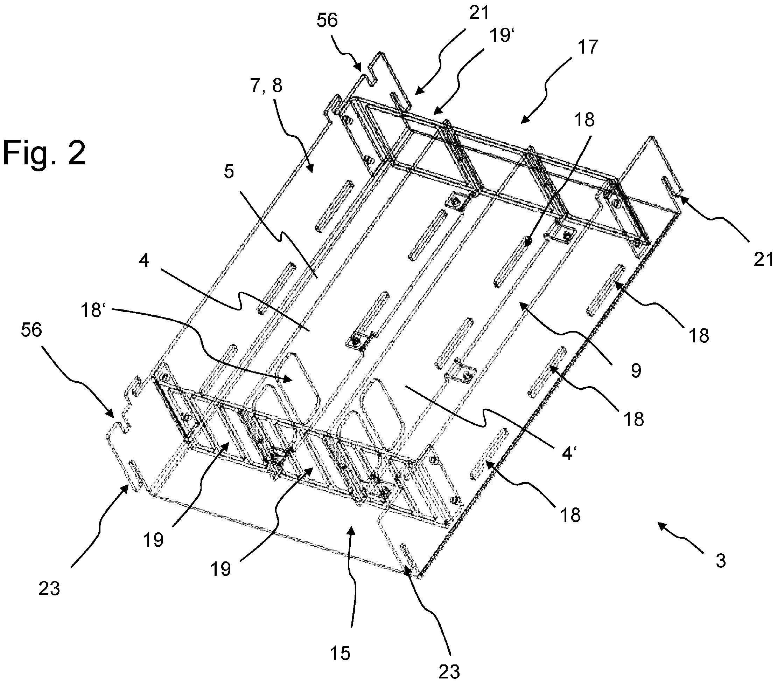

Das Grillgerät 1 umfasst eine trogartige Brennstoffschale 3, deren einzelne Komponenten nochmals in der perspektivischen Darstellung nach Fig. 2 dargestellt sind. Die Brennstoffschale 3 besitzt eine umlaufende Mantelfläche 7 (vgl. Fig. 2), die einen Brennraum festlegt. In den Brennraum können vor einer Inbetriebnahme des Grillgerätes 1 Holzkohle oder Holzkohlebriketts bzw. Eierbriketts eingebracht werden, um die für das Garen bzw. Grillen von Grillgut notwendige Temperatur bereitzustellen.

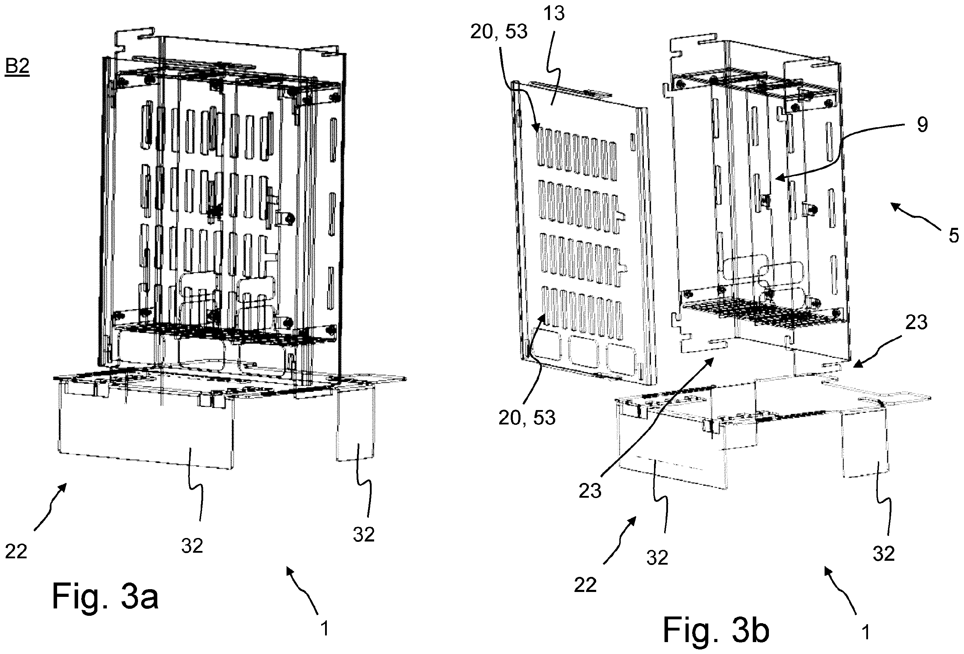

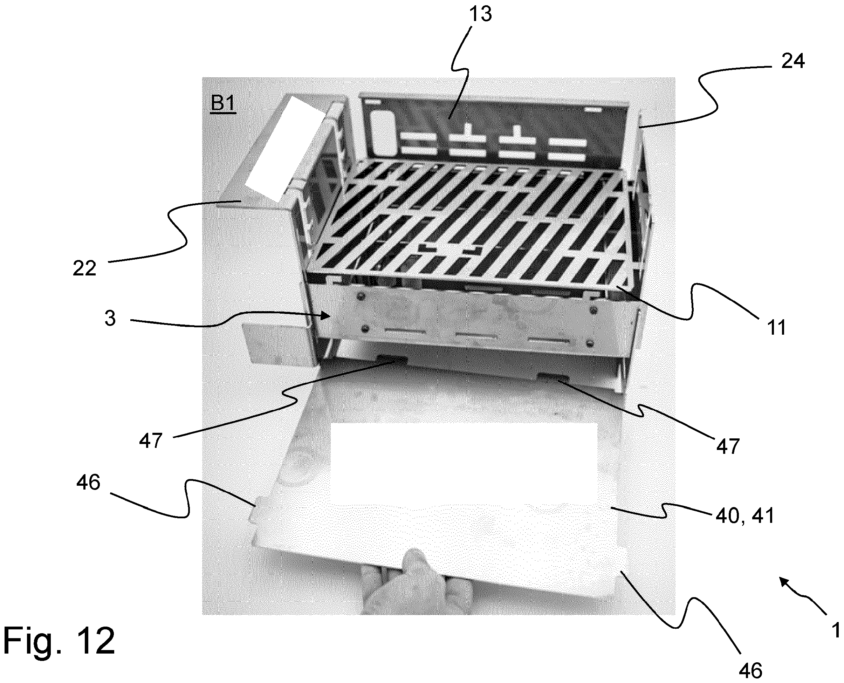

Die Brennstoffschale 3 bildet eine Bodenfläche 5 aus. Die Bodenfläche 5 ist bevorzugt im Wesentlichen horizontal orientiert, sofern sich das Grillgerät 1 in einer nachfolgend noch weiter beschriebenen ersten Betriebslage B1 (vgl. Fig. 12) befindet. Der Bodenfläche 5 liegt eine Oberseite 9 der Brennstoffschale 3 gegenüber, die an die Mantelfläche 7 anschließt und bei der Explosionsdarstellung gemäß Fig. 1 geöffnet ist. Wenn sich die Brennstoffschale 3 in einer zweiten Betriebslage B2 (vgl. Fig. 3a) befindet, welche nachfolgend noch beschrieben wird, ist diese Oberseite 9 durch die Deckelfläche 13 abgedeckt. Die Deckelfläche 13 kann hierzu an der Brennstoffschale 3 fixiert werden.

Bestandteil des Grillgerätes 1 sind zudem eine erste Verschlussplatte 22 sowie eine zweite Verschlussplatte 24. Die erste Verschlussplatte 22 und die zweite Verschlussplatte 24 bilden Auflagefüße 34 und 35 aus, über welche das Grillgerät 1 auf einer Bodenfläche aufstehen kann, wenn sich das Grillgerät 1 in der ersten Betriebslage B1 befindet. Insofern wird das Grillgerät 1 über die Auflagefüße 34 und 35 getragen, wenn über das Grillgerät 1 Grillgut gegart wird. Ziffern 38 und 39 verweisen auf randseitige Kanten der Auflagefüße 34 und 35, über welche das portable Grillgerät 1 mit einer Bodenfläche in der ersten Betriebslage B1 in Kontakt steht.

Die erste und die zweite Verschlussplatte 22 und 24 bilden zudem Aufnahmen 27 und 28 aus, in welche die Brennstoffschale 3 mit korrespondierenden Vorsprüngen 21 und 23 (vgl. Fig. 2) eingehängt werden kann, um die Verschlussplatten 22 und 24 für die erste Betriebslage B1 mit der Brennstoffschale 3 zu verbinden. Nach einer solchen hergestellten Verbindung zwischen den Verschlussplatten 22 und 24 und der Brennstoffschale 3 kann der Grillrost 11 auf einem ausgewählten Höhenniveau von mehreren unterschiedlichen Höhenniveaus in die erste Verschlussplatte 22 und in die zweite Verschlussplatte 24 eingehängt werden.

Die erste Verschlussplatte 22 und die zweite Verschlussplatte 24 besitzen zum Ausbilden der mehreren unterschiedlichen Höhenniveaus mehrere Schlitze 42, 42' und 42" bzw. 43, 43' und 43", welche mehreren Schlitze 42, 42`, 42" bzw. 43, 43' und 43" in vertikaler Richtung zueinander versetzt in die jeweilige Verschlussplatte 22 bzw. 24 eingebracht sind. Über abstehende Zapfen 12 wird der Grillrost 1 in der ersten Betriebslage B1 in jeweils zwei Schlitze 42, 42' bzw. 42" der ersten Verschlussplatte 22 und in jeweils zwei weitere Schlitze 43, 43', 43" der zweiten Verschlussplatte 24 eingehängt, welche das jeweilige für den Grillrost 11 vorgesehene Höhenniveau ausbilden.

Die Bezugsziffer 40 verweist auf einen Einsatz, welcher in Hinblick auf seine Funktion als Raclette-Pfanne 41 ausgebildet ist. Die erste Verschlussplatte 22 besitzt eine Ausnehmung 52. Auch die zweite Verschlussplatte 24 besitzt eine Ausnehmung 54. In die Ausnehmungen 52 und 54 kann der Einsatz 40 bzw. die Raclette-Pfanne 41 über Haltenasen 46 eingesetzt werden, so dass der Einsatz 40 bzw. die Raclette-Pfanne 41 sodann über die Verschlussplatten 22 und 24 getragen wird und sich hierbei unterhalb der Brennstoffschale 3 befindet, wenn das Grillgerät 1 in die erste Betriebslage B1 gebracht ist.

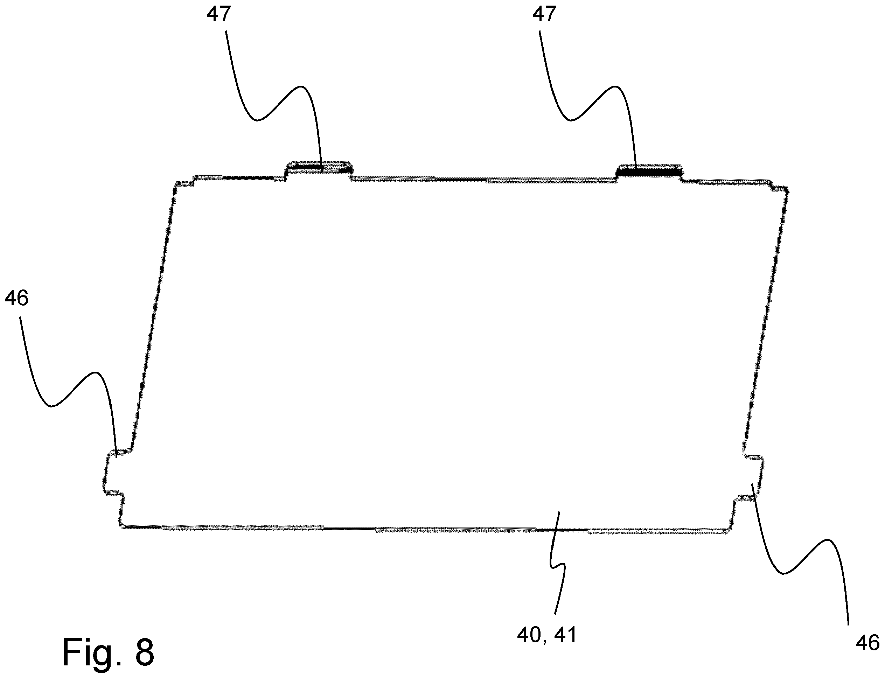

Die Fig. 1 sowie auch die Fig. 8 zeigen darüber hinaus, dass der Einsatz 40 bzw. die Raclette-Pfanne 41 über weitere Haltenasen 47 verfügt. Über die weiteren Haltenasen 47 kann der Einsatz 40 bzw. die Raclette-Pfanne 41 in Ausnehmungen 53 der Deckelfläche 13 eingehängt werden, wenn die Deckelfläche 13 an der trogartigen Brennstoffschale 3 angeordnet ist und hierbei als Windschutz fungiert. Somit wird der Einsatz 40 bzw. die Raclette-Pfanne 41 über seine Haltenasen 46 sowie über seine weiteren Haltenasen 47 in die erste Verschlussplatte 22, in die zweite Verschlussplatte 24 sowie in die Deckelfläche 13 eingehängt, wenn sich das portable Grillgerät 1 in der ersten Betriebslage B1 (vgl. Fig. 12) befindet.

Gegenüber einer Betriebstemperatur, welche über die Brennstoffschale 3 im Bereich des Grillrostes 11 abgegeben wird, ist eine jeweilige Temperatur im Bereich der Raclette-Pfanne 41 geringer ausgebildet, so dass das Grillgerät 1 als Raclette-Ofen eine Schmelzfunktion für Käse bereitstellen kann, während zeitgleich auf dem Grillrost 11 weiteres Grillgut gegart wird.

Die Brennstoffschale 3 bzw. die hierin aufgenommene Grillkohle oder Holzkohle, stellt die jeweilige Temperatur zum Grillen von auf dem Grillrost 11 angeordnetem Grillgut sowie die jeweilige verminderte Temperatur für die Raclette-Funktion bereit. Befindet sich das portable Grillgerät 1 in der ersten Betriebslage B1, kann über das portable Grillgerät 1 somit auf dem Grillrost 11 angeordnetes Grillgut gegrillt und zudem eine Raclette-Funktion für die von den Verschlussplatten 22 und 24 und der Deckelfläche 13 gemeinsam getragene Raclette-Pfanne 41 bereitgestellt werden.

Die Deckelfläche 13 ist auch vorgesehen, um in einer noch beschriebenen zweiten Betriebslage B2 die Oberseite 9 der Brennstoffschale 3 abzudecken. In der ersten Betriebslage B1 kann die Deckelfläche 13, wie vorhergehend bereits erwähnt, in eine Rückseite der Brennstoffschale 3 eingehängt werden, um die Brennstoffschale 3 hierdurch vor Wind zu schützen bzw. um hierdurch einen Windschutz des portablen Grillgerätes 1 auszubilden.

Das portable Grillgerät 1 kann zudem eine in den Figuren der vorliegenden Patentanmeldung nicht mit dargestellte Grillzange umfassen, mit welcher die Deckelfläche 13 für die erste Betriebslage B1 in die Brennstoffschale 3 eingehängt wird und zum Wechsel aus der ersten Betriebslage B1 in die zweite Betriebslage B2 aus der Brennstoffschale 3 ausgehängt wird. Hierdurch kann das Grillgerät 1 auch dann zerlegt werden, wenn das Grillgerät 1 noch eine hohe Temperatur oder Restwärme aufweist.

Wie Fig. 1 erkennen lässt, bildet die erste Verschlussplatte 22 Stützfüße 32 aus. Über die Stützfüße 32 steht das Grillgerät 1 auf einer Bodenfläche auf, wenn sich das Grillgerät 1 in einer zweiten Betriebslage B2 befindet, welche in Fig. 3a gezeigt wird. Bei der Ausführungsform nach Fig. 1 umfasst die erste Verschlussplatte 22 genau drei Stützfüße 32.

Die Fig. 2 zeigt eine schematische Perspektivansicht einer Ausführungsform einer Brennstoffschale 3, wie sie bei diversen Ausführungsformen eines erfindungsgemäßen Grillgeräts 1 vorgesehen sein kann. Die Brennstoffschale 3 umfasst eine Bodenfläche 5 sowie eine umlaufende Mantelfläche 7. Eine Oberseite 9 der Brennstoffschale 3 ist in Fig. 2 offen und kann für eine zweite Betriebslage B2 (vgl. Fig. 3a) mit einer Deckelfläche 13 (vgl. Fig. 3b) abgedeckt werden. Sofern das Grillgerät 1 sich in einer ersten Betriebslage B1 befindet, ist im Bereich der Oberseite 9 der Brennstoffschale 3 ein Grillrost 11 angeordnet.

Die Bezugsziffer 15 verweist in Fig. 2 auf eine erste Seite der Brennstoffschale 3. Wenn Grillgut gegart werden soll und sich ein Grillrost 11 im Bereich der Oberseite 9 befindet, ist im Bereich der ersten Seite 15 die erste Verschlussplatte 22 angeordnet, wobei die auf Verweis mit Ziffer 23 dargestellten Vorsprünge in die Aufnahmen 28 der ersten Verschlussplatte 22 eingreifen. bzw. wobei die auf Verweis mit Ziffer 23 dargestellten Vorsprünge in die erste Verschlussplatte 22 eingehängt werden. Im Bereich der ersten Seite 15 bildet die Brennstoffschale 3 zudem mehrere Durchbrüche 19 aus, so dass Frischluft in die Brennstoffschale 3 gelangen kann, sofern sich das Grillgerät 1 in einer zweiten Betriebslage B2 entsprechend Fig. 3a befindet, bei welcher die Deckelfläche 13 auf die Oberseite 9 der Brennstoffschale 3 aufgesetzt ist. Auch die Mantelfläche 7 bildet mehrere Durchbrüche 18 aus, über welche Kohlebriketts mit Frischluft versorgt werden können, wenn sich das Grillgerät 1 in der ersten Betriebslage B1 befindet und Grillgut gegart wird.

Über mehrere Trennwände 4 und 4` werden mehrere Kammern gebildet, in welchen Holzkohlebriketts in benachbarten Reihen angeordnet werden können. Um einen ausreichenden Luftaustausch zwischen den Kammern gewährleisten zu können, sind auch die Trennwände 4 und 4" mit Durchbrüchen 18 versehen. Die auf Verweis mit Ziffer 18' dargestellten Durchbrüche der Trennwände 4 und 4' besitzen gegenüber den Durchbrüchen 18 der Trennwände 4 und 4` eine größere Dimensionierung. In diesem Bereich kann ein Anzünder angeordnet werden, wenn das Grillgerät 1 entzündet werden soll. Durch die größere Dimensionierung der Durchbrüche 18` kann mit hoher Sicherheit gewährleistet werden, dass sich die in den via die Trennwände 4 und 4` gebildeten Kammern angeordneten Kohlebriketts mit hoher Sicherheit entzünden.

In der Darstellung der Fig. 3a ist das Grillgerät 1 in eine zweite Betriebslage B2 gebracht. In dieser zweiten Betriebslage B2 können durch die Brennstoffschale 3 aufgenommene Kohlebriketts oder Holzkohlebriketts entzündet werden, bevor das Grillgerät 1 in die erste Betriebslage B1 wechselt. Wie Fig. 3b verdeutlicht, wird hierzu die Deckelfläche 13 an der Brennstoffschale 3 angeordnet bzw. auf die Oberseite 9 der Brennstoffschale 3 aufgesetzt. Bevor die trogartige Brennstoffschale 3 entsprechend Fig. 3a auf die erste Verschlussplatte 22 aufgesetzt wird, werden in der trogartigen Brennstoffschale 3 Anzünder und Kohlebriketts angeordnet, wie dies vorhergehend bereits beschrieben wurde.

Nach dem Aufsetzen der trogartigen Brennstoffschale 3 entsprechend Fig. 3a auf die erste Verschlussplatte 22 können die Anzünder entfacht werden. Aufgrund der Durchbrüche 19 und 19' (vgl. Fig. 2) entsteht ein Kamineffekt, über welchen sämtliche durch die trogartige Brennstoffschale 3 aufgenommene Kohlebriketts zum Glühen gebracht werden. Hat die trogartige Brennstoffschale 3 eine Temperatur erreicht, welche zum Garen von Grillgut geeignet ist, wird an der trogartigen Brennstoffschale 3 die zweite Verschlussplatte 24 angeordnet, wobei sich die trogartige Brennstoffschale 3 hierbei weiterhin in ihrer Position bzw. Orientierung entsprechend Fig. 3a befindet.

Erst nachdem die zweite Verschlussplatte 24 an der trogartigen Brennstoffschale angeordnet ist, wird das gesamte Grillgerät um 90° gekippt und zum Garen von Grillgut in die erste Betriebslage B1 (vgl. Fig. 12) gebracht. Hierzu kann eine nicht mit dargestellte Grillzange vorgesehen sein, über welche die zweite Verschlussplatte 24 gegriffen und das gesamte Grillgerät 1 um 90° geschwenkt wird.

Nachdem sämtliches Grillgut über das Grillgerät 1 gegart wurde, kann das Grillgerät 1 aus der ersten Betriebslage B1 entsprechend Fig. 12 nochmals in die zweite Betriebslage B2 entsprechend Fig. 3a gebracht werden. Hierzu wird das gesamte Grillgerät 1 um 90° zurückgeschwenkt und die zweite Verschlussplatte 24 (vgl. Fig. 1) wieder von der trogartigen Brennstoffschale 3 abgenommen. Über die Durchbrüche 19` (vgl. Fig. 2) kann die trogartige Brennstoffschale 3 sodann mit Ästen beschickt werden, wodurch das Grillgerät 1 weitere Verbrennungswärme erzeugt und als Ofen genutzt werden kann.

Die Fig. 3a verdeutlicht auch, dass das portable Grillgerät 1 in der zweiten Betriebslage B2 über Stützfüße 32, welche durch die erste Verschlussplatte 22 ausgebildet werden, auf einer Bodenfläche aufsteht. In der ersten Betriebslage B1 stehen diese Stützfüße 32 seitlich vom Grillgerät 1 ab. Um das portable Grillgerät 1 aus der zweiten Betriebslage B2 entsprechend Fig. 3a in die erste Betriebslage B1 (vgl. Fig. 12) zu überführen, kann bzw. soll die bereits an der trogartigen Brennstoffschale 3 angeordnete erste Verschlussplatte 22 an der trogartigen Brennstoffschale 3 verbleiben, so dass die eine hohe Temperatur aufweisende trogartige Brennstoffschale 3 nicht berührt werden muss, um aus der zweiten Betriebslage B2 in die erste Betriebslage B2 zu wechseln.

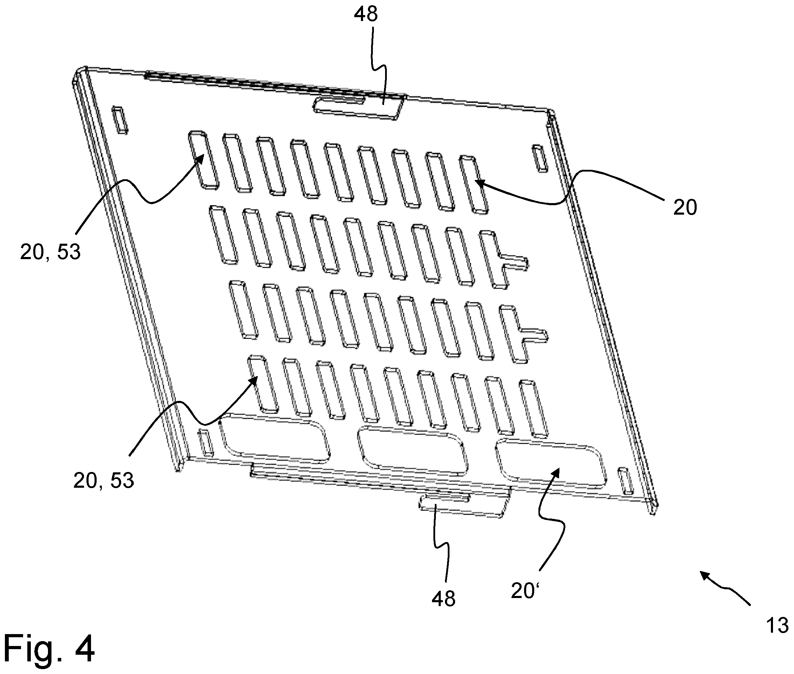

Die Fig. 4 zeigt eine Deckelfläche 13, wie sie bei diversen Ausführungsformen eines erfindungsgemäßen Grillgerätes 1 vorgesehen sein kann. Die Deckelfläche 13 besitzt zwei Haken 48, über welche die Deckelfläche 13 in die trogartige Brennstoffschale 3 eingehängt werden kann, sofern die Deckelfläche 13 in der ersten Betriebslage B1 als Windschutz des Grillgerätes 1 genutzt werden soll. Eine Zusammenschau der Fig. 4 mit Fig. 2 verdeutlicht hierbei, dass die trogartige Brennstoffschale 3 zum Einhängen der Deckelfläche 13 für jeden der Haken 48 einen Spalt 56 ausbildet.

Wenn ein Anzünder der trogartigen Brennstoffschale 3 entfacht werden soll, befindet sich dieser Anzünder im Bereich der Durchbrüche, auf welche mit Ziffer 20' verwiesen wird. Die Durchbrüche 20' sind gegenüber den Durchbrüchen 20 vergrößert ausgebildet, so dass eine ausreichende Frischluftzufuhr über die Durchbrüche 20' in die trogartige Brennstoffschale 3 gelangt, wenn der Anzünder entfacht wird. Auch bleiben Anzünder über die Durchbrüche 20` aufgrund ihres vergrößerten Durchmessers leicht zugänglich, wenn die Deckelfläche 13 bereits auf die trogartige Brennstoffschale 3 entsprechend Fig. 3a aufgesetzt wurde, um die Anzünder hierauf folgend zu entzünden.

Zwei der Durchbrüche 20 bilden in Fig. 4 Ausnehmungen 53 aus, in welche ein Einsatz 40 (vgl. Fig. 8) über weitere Haltenasen 47 eingehängt werden kann.

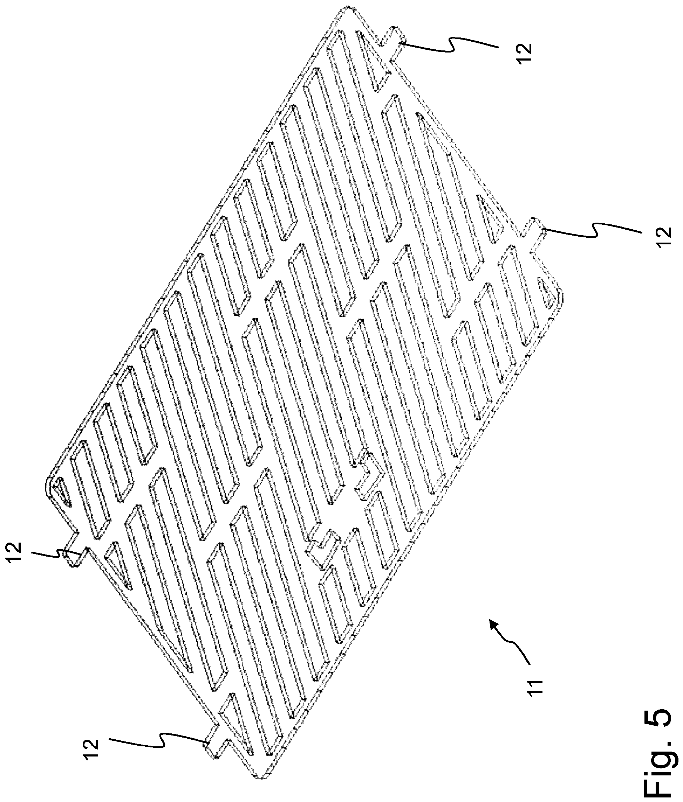

Die Fig. 5 zeigt einen Grillrost 11, wie er bei diversen Ausführungsformen eines erfindungsgemäßen Grillgerätes 1 vorgesehen sein kann. Der Grillrost 11 bildet mehrere Zapfen 12 aus, über welche der Grillrost 11 in die Schlitze 42, 42` 42" bzw. 43, 43, 43" (vgl. Fig. 1) der ersten Verschlussplatte 22 und der zweiten Verschlussplatte 24 auf unterschiedlichen Höhenniveaus eingehängt werden kann.

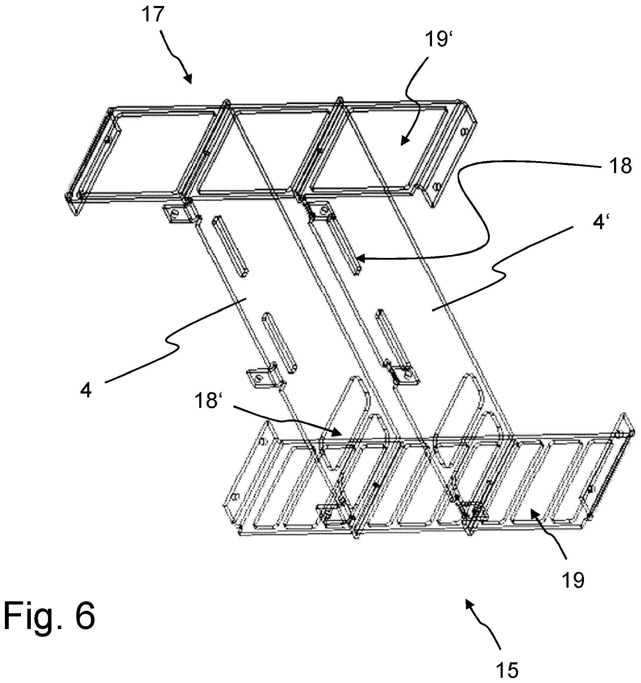

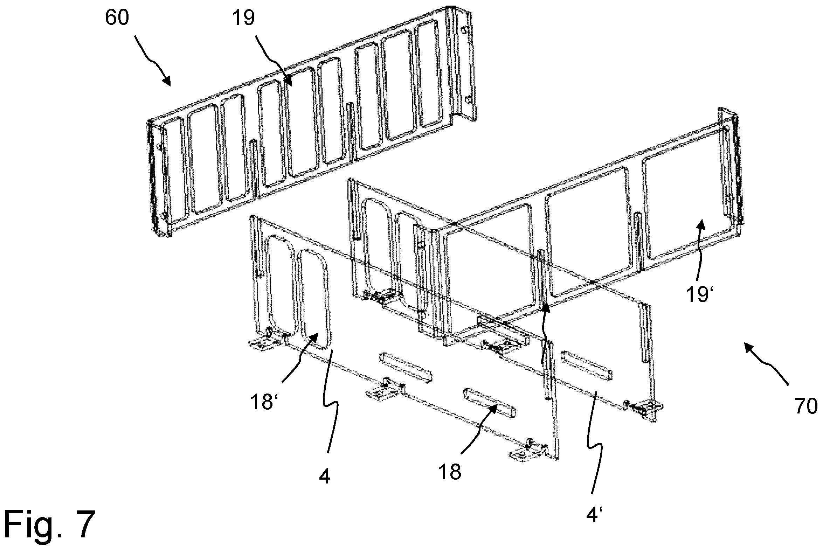

Die Figuren 6 und 7 zeigen einzelne Bestandteile der trogartigen Brennstoffschale 3 aus dem Ausführungsbeispiel nach Fig. 2. Hierin sind nochmals die Trennwände 4 und 4' zu erkennen, welche jeweils mehrere Durchbrüche 18 und 18' zum Luftaustausch besitzen und parallel zueinander verlaufen. Über die Durchbrüche 19 und 19' bildet die trogartige Brennstoffschale 3 in der zweiten Betriebslage B2 einen Kamineffekt aus, durch welchen im Bereich der Trennwände 4 und 4` angeordnete Kohlebriketts entzündet werden können. Die Durchbrüche 18` sind gegenüber den Durchbrüchen 18 vergrößert ausgebildet. Im Bereich der Durchbrüche 18' befindet sich ein Anzünder, welcher bei Verwendung des Grillgerätes 1 entzündet wird. Wenn die Deckelfläche 13 die trogartige Brennstoffschale 3 aufgesetzt wurde, sind ebenso deren vergrößert ausgebildeten Durchbrüche 20' im Bereich der vergrößert ausgebildeten Durchbrüche 18` der Trennwände 4 und 4` angeordnet.

Die Fig. 7 verdeutlicht sodann, dass die beiden Trennwände 4 und 4` von den beiden Funktionsteilen 60 und 70, welche die Öffnungen 19 und 19' ausbilden, getrennt werden können. Um die Trennwände 4 und 4` mit den Funktionsteilen 60 und 70 zu verbinden, werden die Trennwände 4 und 4` in die Funktionsteile 60 und 70 eingeschoben.

Die Fig. 8 zeigt einen Einsatz 40, wie er bei diversen Ausführungsformen eines erfindungsgemäßen Grillgerätes 1 vorgesehen sein kann. Der Einsatz 40 ist als Raclette-Pfanne 41 ausgebildet und besitzt mehrere Haltenasen 46, über welche der Einsatz 40 in Ausnehmungen 52 und 54 (vgl. Fig. 1) der ersten Verschlussplatte 22 und der zweiten Verschlussplatte 24 eingehängt werden kann.

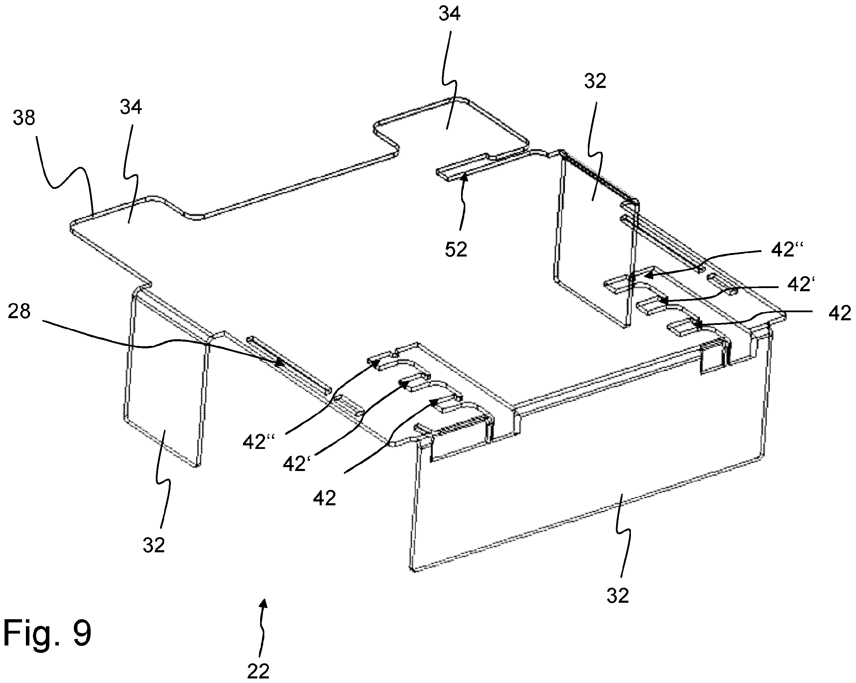

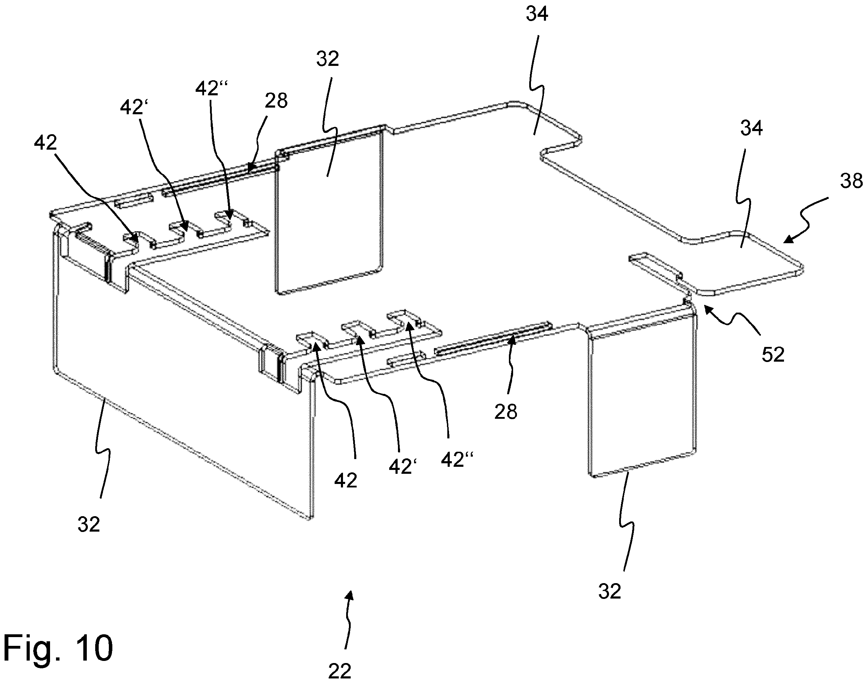

Die Figuren 9 und 10 zeigen jeweils eine schematische Perspektivansicht der Ausführungsform der ersten Verschlussplatte 22 des Ausführungsbeispiels eines Grillgerätes 1 nach Fig. 1. In Figuren 9 und 10 sind nochmals die Schlitze 42, 42' und 42" zu erkennen, in welche der Grillrost 11 (vgl. Fig. 5) mit seinen Zapfen 12 auf unterschiedlichen Höhenniveaus eingehängt werden kann. Die erste Verschlussplatte 22 besitzt im Ausführungsbeispiel nach Figuren 9 und 10 genau drei Stützfüße 32, über welche das Grillgerät 1 bei eingenommener zweiten Betriebslage B2 (vgl. Fig. 3a) auf einer Bodenfläche aufsteht. Eine Ausnehmung, in welche ein Einsatz 40 bzw. eine Raclette-Pfanne 41 eingeschoben werden kann, ist weiterhin auf Verweis mit Ziffer 52 dargestellt.

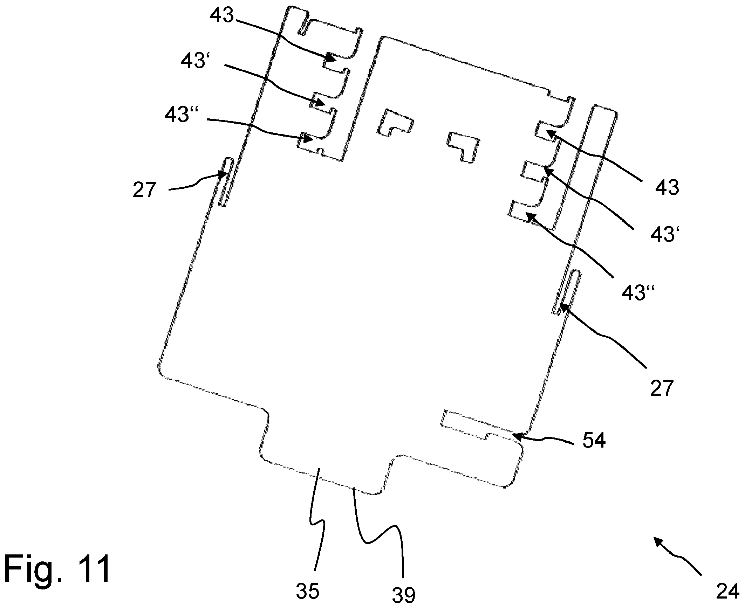

Die Fig. 11 zeigt eine schematische Perspektivansicht der Ausführungsform der zweiten Verschlussplatte 24 des Ausführungsbeispiels eines Grillgerätes 1 nach Fig. 1. Zu erkennen sind nochmals die Schlitze 43, 43` und 43", in welche der Grillrost 11 (vgl. Fig. 5) mit seinen Zapfen 12 auf unterschiedlichen Höhenniveaus eingehängt werden kann. Die Aufnahmen 27 dienen zum Einhängen der trogartigen Brennstoffschale 3 in die zweite Verschlussplatte 24. In die Ausnehmung 54 kann der Einsatz 40 bzw. die Raclette-Pfanne 41 eingeschoben werden.

Die Fig. 12 zeigt schließlich eine Ausführungsform eines Grillgerätes 1, welches in eine erste Betriebslage B1 gebracht wurde. Der Grillrost 11 ist an der ersten Verschlussplatte 22 und an der zweiten Verschlussplatte 24 angeordnet. Als Windschutz ist zudem eine Deckelfläche 13 in aufrechter Orientierung am Grillgerät 1 befestigt. Der auf Verweis mit Ziffer 40 dargestellte Einsatz bzw. die Raclette-Pfanne 41 wird über ihre Haltenasen 46 in die erste Verschlussplatte 22 und in die zweite Verschlussplatte 24 eingehängt. Über ihre weiteren Haltenasen 47 wird der Einsatz 40 bzw. die Raclette-Pfanne 41 in die Deckelfläche 13 eingehängt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Portables Grillgerät
- 3: Trogartige Brennstoffschale
- 4: Trennwand
- 4`: Trennwand
- 5: Bodenfläche
- 7: Umlaufende Mantelfläche
- 8: Mantelseite
- 9: Oberseite
- 11: Grillrost
- 12: Zapfen
- 13: Deckelfläche
- 15: Erste Seite
- 17: Zweite Seite
- 18: Durchbruch, erster Durchbruch
- 19: Durchbruch, zweiter Durchbruch
- 22: Erste Verschlussplatte
- 24: Zweite Verschlussplatte
- 32: Stützfuß
- 34: Auflagefuß, erster Auflagefuß
- 35: Auflagefuß, zweiter Auflagefuß
- 38: Randseitige Kante (Erster Auflagefuß)
- 39: Randseitige Kante (Zweiter Auflagefuß)
- 40: Einsatz
- 41: Raclette-Pfanne
- 42: Schlitz (erste Verschlussplatte 22)
- 42': Schlitz (erste Verschlussplatte 22)
- 42": Schlitz (erste Verschlussplatte 22)
- 46: Haltenase
- 47: Weitere Haltenase
- 48: Haken
- 52: Ausnehmung (erste Verschlussplatte 22)
- 53: Ausnehmung (Deckelfläche 13)
- 54: Ausnehmung (zweite Verschlussplatte 24)
- 56: Spalt
- 60: Funktionsteil
- 70: Funktionsteil
- B1: Erste Betriebslage
- B2: Zweite Betriebslage

## Patentansprüche

1. Portables Grillgerät (1) mit einer trogartigen Brennstoffschale (3), die eine Bodenfläche (5) und eine umlaufende Mantelfläche (7) aufweist, wobei eine der Bodenfläche (5) insbesondere in paralleler Anordnung gegenüberliegende und sich an die Mantelfläche (7) anschließende Oberseite (9) der Brennstoffschale (3) in einer ersten Betriebslage (B1) des Grillgerätes (1) offen und/oder durch einen an der Mantelfläche (7) anliegenden oder von dieser beabstandeten Grillrost (11) bedeckt ist, und wobei die Oberseite (9) in einer zweiten Betriebslage (B2) des Grillgerätes (1) durch eine an der trogartigen Brennstoffschale (3) fixierbare Deckelfläche (13) bedeckt und zumindest teilweise verschlossen ist,
- wobei sich an einer ersten Seite (15) der Mantelfläche (7) eine erste Verschlussplatte (22) befindet, die bei aufrecht stehender Brennstoffschale (3) mit zu einem Untergrund in etwa vertikal stehenden Bodenfläche (5) und Deckelfläche (13) und sich dabei in der zweiten Betriebslage (B2) befindlichem Grillgerät (1), bei dem die Deckelfläche (13) an der Mantelfläche (7) fixiert ist, einen auf einem Untergrund stehenden Stützfuß (32) und bei flach liegender Brennstoffschale (3) einen von zwei Auflagefüßen (34, 35) bildet,
- wobei an einer zweiten Seite (17) der umlaufenden Mantelfläche (7), die der ersten Seite (15) mit der daran angeordneten ersten Verschlussplatte (22) gegenüberliegt, eine zweite Verschlussplatte (24) fixierbar ist, die bei flach liegender Brennstoffschale (3) mit zum Untergrund in etwa parallel stehender Bodenfläche (5) und sich dabei in der ersten Betriebslage (B1) befindlichem Grillgerät (1), bei dem die Deckelfläche (13) entfernt und/oder durch den Grillrost (11) ersetzt ist, den zweiten Auflagefuß (35) bildet, wobei die beiden gegenüberliegenden Auflagefüße (34, 35) mit randseitigen Kanten (38, 39) jeweils auf dem Untergrund stehen,
- wobei die Bodenfläche (5) und/oder die von der Brennstoffschale (3) lösbare und dort fixierbare Deckelfläche (13) und/oder Abschnitte der Mantelfläche (7) der Brennstoffschale (3) Durchbrüche (18, 19, 19`, 20, 20`) zur Verbrennungsluftzufuhr und/oder zur Wärmeabfuhr bei in der Brennstoffschale (3) befindlichem entzündetem Brennstoff aufweisen,
- und wobei die trogartige Brennstoffschale (3) mindestens eine zur Bodenfläche (5) in etwa senkrechte Trennwand (4, 4`) aufweist, deren Längserstreckungsrichtung in etwa senkrecht zur ersten Seite (15) der Mantelfläche (7) mit der daran befindlichen ersten Verschlussplatte (22) sowie in etwa senkrecht zur gegenüberliegenden zweiten Seite (17) der Mantelfläche (7) mit der daran fixierbaren zweiten Verschlussplatte (24) verläuft.

2. Portables Grillgerät nach Anspruch 1, bei dem
- die flach liegende Brennstoffschale (3), deren Mantelseiten (8) vertikal ausgerichtet oder sich leicht trichterförmig nach außen öffnen, in der ersten Betriebslage (B1) des Grillgerätes (1) oberseitig durch den an der Mantelfläche (7) anliegenden oder von dieser beabstandeten Grillrost (11) bedeckt ist, und/oder bei welchem portablen Grillgerät
- die Brennstoffschale (3) in der zweiten Betriebslage (B2) des Grillgerätes (1) im Wesentlichen vertikal steht, wobei die in der ersten Betriebslage (B1) als Oberseite (9) der Brennstoffschale (3) fungierende vertikale ausgerichtete Frontseite in der zweiten Betriebslage (B2) des Grillgerätes (1) durch die an der trogartigen Brennstoffschale (3) fixierte Deckelfläche (13) bedeckt und zumindest teilweise verschlossen ist.

3. Portables Grillgerät nach Anspruch 1 oder Anspruch 2, bei dem ein erster stirnseitiger Rand der Mantelfläche (7), der das Innenvolumen der Brennstoffschale (3) an einer zur ersten Verschlussplatte (22) weisenden ersten Stirnseite begrenzt, mit Durchbrüchen (19, 19') zur Verbrennungsluftzufuhr versehen ist.

4. Portables Grillgerät nach einem der Ansprüche 1 bis 3, bei dem die erste Verschlussplatte (22) und die zweite Verschlussplatte (24) jeweils geschlossen sind und die ersten bzw. zweiten Stirnseiten an der Mantelfläche (7) der Brennstoffschale (3) in der ersten Betriebslage (B1) zumindest annähernd abschließen.

5. Portables Grillgerät nach einem der Ansprüche 1 bis 4, bei welchem die erste Verschlussplatte (22) und die zweite Verschlussplatte (24) derart ausgebildet sind, dass der Grillrost (11) in der ersten Betriebslage (B1) in mehreren unterschiedlichen Höhenniveaus an der ersten Verschlussplatte (22) und an der zweiten Verschlussplatte (24) angeordnet werden kann.

6. Portables Grillgerät nach Anspruch 5, bei welchem in die erste Verschlussplatte (22) und in die zweite Verschlussplatte (24) zum Ausbilden der mehreren unterschiedlichen Höhenniveaus jeweils mehrere Schlitze (42, 42`, 42", 43, 43', 43") eingebracht sind.

7. Portables Grillgerät nach einem der Ansprüche 1 bis 6, welches einen Einsatz (40) umfasst, der vorzugsweise als Raclette-Pfanne (41) ausgebildet ist, und bei welchem portablen Grillgerät der Einsatz (40) in der ersten Betriebslage (B1) lösbar an der ersten Verschlussplatte (22) und der zweiten Verschlussplatte (24) und/oder lösbar an der Deckelfläche (13) angeordnet werden kann, so dass sich der Einsatz (40) hierbei unterhalb der trogartigen Brennstoffschale (3) befindet.

8. Verfahren zur Handhabung und/oder Verwendung eines portablen Grillgerätes (1) gemäß einem der Ansprüche 1 bis 7, bei welchem Verfahren das Grillgerät (1) aus einer ersten Betriebslage (B1), bei der die Brennstoffschale (3) eine liegende Anordnung mit nach unten weisender Bodenfläche (5) einnimmt, und bei der die eine der Bodenfläche (5) insbesondere in paralleler Anordnung gegenüberliegende und sich an die Mantelfläche anschließende Oberseite (9) der Brennstoffschale (3) offen und/oder durch den an der Mantelfläche (7) anliegenden oder von dieser beabstandeten Grillrost bedeckt ist, in eine zweite Betriebslage (B2), bei der die Brennstoffschale (3) eine aufrecht stehende Anordnung einnimmt, und bei der die Oberseite (9) durch die an der trogartigen Brennstoffschale (3) fixierbare Deckelfläche (13) bedeckt und zumindest teilweise verschlossen ist, gebracht wird und umgekehrt.

9. Verfahren zur Handhabung und/oder Verwendung des portablen Grillgerätes (1) nach Anspruch 8, bei welchem Verfahren an einer ersten Seite (15) der umlaufenden Mantelfläche (7) der Brennstoffschale (3) die erste Verschlussplatte (22) angefügt ist oder wird, die bei aufrecht stehender Brennstoffschale (3) mit zu einem Untergrund in etwa vertikal stehenden Bodenfläche (5) und Deckelfläche (13) und sich dabei in der zweiten Betriebslage (B2) befindlichem Grillgerät (1), bei dem die Deckelfläche (13) an der Mantelfläche (7) fixiert ist, den auf einem Untergrund stehenden Stützfuß (32) bildet.

10. Verfahren nach Anspruch 8 oder 9, bei dem an einer zweiten Seite (17) der umlaufenden Mantelfläche (7), die der ersten Seite (15) mit der daran angeordneten ersten Verschlussplatte (22) gegenüberliegt, die zweite Verschlussplatte (24) fixiert werden kann, die bei flach liegender Brennstoffschale (3) mit zum Untergrund in etwa parallel stehender Bodenfläche (5) und sich dabei in der ersten Betriebslage (B1) befindlichem Grillgerät (1), bei dem die Deckelfläche (13) entfernt und/oder durch den Grillrost (11) ersetzt ist, den zweiten Auflagefuß (35) bildet, wobei die beiden gegenüberliegenden Auflagefüße (34, 35) mit randseitigen Kanten (38, 39) jeweils auf dem Untergrund stehen.

11. Verfahren nach einem der Ansprüche 8 bis 10 zur Vorbereitung des portablen Grillgerätes (1), bei dem die Brennstoffschale (3) mit abgenommener Deckelfläche (13) und abgenommenen Verschlussplatten (22, 24) mit Brennstoffportionen und mit Feststoff-Anzündern oder Feststoff-Brandbeschleunigern oder dergleichen bestückt wird, die in die zwei, drei vier oder mehr kanalartige Brennstoffkammern eingelegt werden, die durch Unterteilung der Brennstoffschale (3) mittels der Trennwände (4, 4`) gebildet sind.

12. Verfahren nach Anspruch 11, bei dem nach Befüllen der Brennstoffschale mit Brennstoffportionen und mit Anzünder oder Brandbeschleuniger die Deckelfläche auf dem oberseitigen Rand der Mantelfläche der Brennstoffschale fixiert wird und die Brennstoffschale damit allseitig verschlossen wird und bei dem die erste Verschlussplatte (22) an der ersten Seite (15) des Grillgerätes (1) beziehungsweise der trogartigen Brennstoffschale (3) fixiert und die trogartige Brennstoffschale (3) in die aufrecht stehende zweite Betriebslage (B2) gebracht wird, wonach die Anzünder und der Brennstoff entzündet werden, wobei eine Frischluftzufuhr durch die näher am Stützfuß (32) befindlichen Durchbrüche (19) in/an der Brennstoffschale (3) von unten erfolgt und die Abgas- und Wärmeabfuhr unter Ausbildung eines Kamineffektes durch die nach oben weisende Öffnung beziehungsweise Durchbrüche (19`) an der zweiten Seite (17) der Mantelfläche (7) erfolgt.

13. Verfahren nach Anspruch 12, bei dem die zweite Verschlussplatte an die Brennstoffschale angefügt und diese in die erste Betriebslage des Grillgerätes gebracht wird, nachdem der Brennstoff seine vorgesehene Gartemperatur erreicht hat.

14. Verfahren nach Anspruch 13, bei dem die Deckelfläche (13) von der Brennstoffschale (3) abgenommen und durch einen Grillrost (11) ersetzt wird, der an hierfür vorgesehenen Einschüben oder Schlitzen (42, 42', 42", 43, 43` 43") an den Verschlussplatten (22, 24) positioniert wird, wobei vorzugsweise vorgesehen ist, dass die Deckelfläche (13) hierauf in vertikaler Position als Windschutz unter Anlage an einer der Mantelseiten (8) zwischen die Verschlussplatten (22, 24) eingefügt wird.

15. Verfahren nach einem der Ansprüche 8 bis 14, bei dem das Grillgerät (1) nach erfolgtem Garen von Speisen und nach teilweise verbranntem Brennstoff nach Abnahme des Grillrostes (11), nach Abnahme der zweiten Verschlussplatte (24) von der Brennstoffschale (3) und nach Aufsetzen der Deckelfläche (13) auf die zuvor mit dem Grillrost (11) bedeckte offene Seite der Brennstoffschale (3) wieder in die aufrecht stehende zweite Betriebslage (B2) gebracht wird, um als Brennofen zu fungieren, wobei durch die oben offene zweite Seite (17) bei abgenommener zweiten Verschlussplatte (24) des in zweiter Betriebslage (B2) aufrecht stehenden Grillgerätes (1) Brennstoff in Gestalt von Holz, Stöcken, Ästen etc. eingefügt werden kann, um mit offener Flamme zu verbrennen.

## Claims

1. A portable barbecue device (1) with a trough-like fuel tray (3), which has a bottom surface (5) and a circumferential shell surface (7), wherein an upper side (9) of the fuel tray (3) opposite the bottom surface (5), in particular in a parallel arrangement, and adjoining the shell surface (7) is open in a first operating position (B1) of the barbecue device (1) and/or is covered by a cooking grate (11) abutting on the shell surface (7) or spaced apart therefrom, and wherein, in a second operating position (B2) of the barbecue device (1), the upper side (9) is covered and at least partially closed by a cover surface (13) which is fixable to the trough-like fuel tray (3),
- wherein a first closure plate (22) is situated on a first side (15) of the shell surface (7), which first closure plate (22) forms a support leg (32) standing on a ground surface when the fuel tray (3) is standing upright with the bottom surface (5) and cover surface (13) standing approximately perpendicular to a ground surface and the barbecue device (1) in this context being in the second operating position (B2) with the cover surface (13) fixed to the shell surface (7), and which first closure plate (22) forms one of two bearing feet (34, 35) when the fuel tray (3) is lying flat,
- wherein a second closure plate (24) is fixable to a second side (17) of the circumferential shell surface (7) situated opposite the first side (15) with the first closure plate (22) arranged thereon, which second closure plate (24) forms the second bearing foot (35) when the fuel tray (3) is lying flat with the bottom surface (5) standing approximately parallel to the ground surface and the barbecue device (1) in this context being in the first operating position (B1) with the cover surface (13) removed and/or replaced by the cooking grate (11), wherein the two oppositely situated bearing feet (34, 35) each stand on the ground surface with bordering edges (38, 39),
- wherein the bottom surface (5) and/or the cover surface (13), which is detachable from the fuel tray (3) and fixable thereto, and/or sections of the shell surface (7) of the fuel tray (3) have openings (18, 19, 19`, 20, 20`) for combustion air supply and/or for heat dissipation when ignited fuel is present in the fuel tray (3),
- and wherein the trough-like fuel tray (3) has at least one partition wall (4, 4`) which is approximately perpendicular to the bottom surface (5), with the longitudinal extension direction of the partition wall (4, 4`) extending approximately perpendicular to the first side (15) of the shell surface (7) with the first closure plate (22) situated thereon and also approximately perpendicular to the opposite second side (17) of the shell surface (7) with the second thereto fixable closure plate (24).

2. The portable barbecue device according to claim 1, in which
- the flat lying fuel tray (3), the shell sides (8) of which are vertically aligned or opening outward in a slightly funnel-shaped manner, is covered on the upper side in the first operating position (B1) of the barbecue device (1) by the cooking grate (11) abutting on the shell surface (7) or spaced apart therefrom, and/or in which portable barbecue device
- the fuel tray (3) is standing substantially vertical in the second operating position (B2) of the barbecue device (1), wherein the vertical-aligned front side, which acts as the upper side (9) of the fuel tray (3) in the first operating position (B1), is covered and at least partially closed in the second operating position (B2) of the barbecue device (1) by the cover surface (13) that is fixed to the trough-like fuel tray (3).

3. The portable barbecue device according to claim 1 or claim 2, in which a first face-side edge of the shell surface (7), which face-side edge delimits the inner volume of the fuel tray (3) at a first face side facing toward the first closure plate (22), is provided with openings (19, 19`) for combustion air supply.

4. The portable barbecue device according to one of the claims 1 to 3, in which the first closure plate (22) and the second closure plate (24) are each closed and at least approximately shut off the first or second face sides at the shell surface (7) of the fuel tray (3) in the first operating position (B1).

5. The portable barbecue device according to one of the claims 1 to 4, in which the first closure plate (22) and the second closure plate (24) are designed in such a manner that the cooking grate (11) can be arranged in the first operating position (B1) at a plurality of different height levels on the first closure plate (22) and on the second closure plate (24).

6. The portable barbecue device according to claim 5, in which a plurality of slots (42, 42`, 42", 43, 43', 43") are introduced each into the first closure plate (22) and into the second closure plate (24) in order to form the plurality of different height levels.

7. The portable barbecue device according to one of the claims 1 to 6, which comprises an insert (40) preferably designed as a raclette pan (41), and in which portable barbecue device the insert (40) can be detachably arranged in the first operating position (B1) on the first closure plate (22) and on the second closure plate (24) and/or detachably arranged on the cover surface (13) such that the insert (40) is in this context situated below the trough-like fuel tray (3).

8. A method for handling and/or using a portable barbecue device (1) according to one of the claims 1 to 7, in which method the barbecue device (1) is brought from a first operating position (B1) into a second operating position (B2) and vice versa, with the fuel tray (3) in the first operating position (B1) assuming a lying arrangement with the bottom surface (5) facing downward, and with the upper side (9) of the fuel tray (3), which upper side (9) is situated opposite, in particular in a parallel arrangement, and which adjoins the shell surface, being open and/or being covered by the cooking grate (11) abutting on the shell surface (7) or spaced apart therefrom; and with the fuel tray (3) in the second operating position (B2) assuming an arrangement standing upright with the upper side (9) covered and at least partially closed by the cover surface (13) which is fixable to the trough-like fuel tray (3).

9. The method for handling and/or using the portable barbecue device (1) according to claim 8, in which method the first closure plate (22) has been or is attached to a first side (15) of the circumferential shell surface (7) of the fuel tray (3), which first closure plate (22) forms the support leg (32) standing on a ground surface when the fuel tray (3) is standing upright with the bottom surface (5) and cover surface (13) standing approximately perpendicular to a ground surface and the barbecue device (1) in this context being in the second operating position (B2) with the cover surface (13) fixed to the shell surface (7).

10. The method according to claim 8 or 9, in which a second closure plate (24) can be fixed to a second side (17) of the circumferential shell surface (7) situated opposite the first side (15) with the first closure plate (22) arranged thereon, which second closure plate (24) forms the second bearing foot (35) when the fuel tray (3) is lying flat with the bottom surface (5) standing approximately parallel to the ground surface and the barbecue device (1) in this context being in the first operating position (B1) with the cover surface (13) removed and/or replaced by the cooking grate (11), wherein the two oppositely situated bearing feet (34, 35) each stand on the ground surface with bordering edges (38, 39).

11. The method according to one of the claims 8 to 10 for preparing the portable barbecue device (1) in which method the fuel tray (3) with the cover surface (13) and closure plates (22, 24) taken off is loaded with fuel portions and with solid fire starters or solid fire accelerators or the like, which are placed into the two, three, four, or more channel-like fuel chambers, which are formed by partitioning of the fuel tray (3) by means of the partition walls (4, 4`).

12. The method according to claim 11, in which, after the fuel tray is filled with fuel portions and with fire starters or fire accelerators, the cover surface is fixed on the top edge of the shell surface of the fuel tray, thereby closing the fuel tray on all sides, and in which method the first closure plate (22) is fixed to the first side (15) of the barbecue device (1) or to the trough-like fuel tray (3) and the trough-like fuel tray (3) is brought into the upright standing second operating position (B2), whereafter the fire starters and the fuel are ignited, wherein fresh air is supplied from below through the openings (19) in/on the fuel tray (3) which are situated closer to the support leg (32), and the exhaust gas and heat are dissipated through the aperture or openings (19`) facing upward on the second side (17) of the shell surface (7), thereby creating a chimney effect.

13. The method according to claim 12, in which the second closure plate is attached to the fuel tray, which is brought into the first operating position of the barbecue device after the fuel has reached its intended cooking temperature.

14. The method according to claim 13, in which the cover surface (13) is taken off the fuel tray (3) and replaced by a cooking grate (11), which is positioned in slide-ins or slots (42, 42`, 42", 43, 43` 43") provided for this purpose on the closure plates (22, 24), wherein it is preferably provided that the cover surface (13) is subsequently inserted in a vertical position as a windshield between the closure plates (22, 24) under abutment on one of the shell sides (8).

15. The method according to one of the claims 8 to 14, in which method, in order for the barbecue device (1) to act as an oven, the barbecue device (1) is returned to the upright standing second operating position (B2) after the food is cooked and after the fuel has been partially burnt, after removal of the cooking grate (11), after removal of the second closure plate (24) from the fuel tray (3) and after the cover surface (13) has been placed on the open side of the fuel tray (3) previously covered by the cooking grate (11), wherein, in order to burn with an open flame, fuel in the form of wood, sticks, branches, etc. can be inserted through the second side (17) which is open at the top when the second closure plate (24) of the barbecue device (1) standing upright in the second operating position (B2) has been taken off.

## Revendications

1. Dispositif de gril portable (1) comprenant un bol à combustible (3) en forme d'auge qui présente une surface de fond (5) et une surface latérale circonférentielle (7), dans lequel une face supérieure (9) du bol à combustible (3) qui est située en regard de la surface de fond (5), en particulier en disposition parallèle, et qui suit la surface latérale (7) est, dans une première position de fonctionnement (B1) du dispositif de gril (1), ouverte et/ou est recouverte par une grille de gril (11) qui est en appui sur la surface latérale (7) ou est espacée de celle-ci, et dans lequel, dans une deuxième position de fonctionnement (B2) du dispositif de gril (1), la face supérieure (9) est recouverte et au moins partiellement fermée par une surface de couvercle (13) qui peut être fixée au bol à combustible (3) en forme d'auge,
- dans lequel sur un premier côté (15) de la surface latérale (7) se trouve une première plaque de fermeture (22) qui, lorsque le bol à combustible (3) est debout et la surface de fond (5) et la surface de couvercle (13) sont situées à peu près verticalement par rapport à un fond et le dispositif de gril (1) se trouve ainsi dans la deuxième position de fonctionnement (B2), dans lequel la surface de couvercle (13) est fixée à la surface latérale (7), forme un pied de support (32) reposant sur un fond et, lorsque le bol à combustible (3) repose à plat, forme l'un de deux pieds d'appui (34, 35),
- dans lequel sur un deuxième côté (17) de la surface latérale circonférentielle (7), qui est situé en regard du premier côté (15) avec la première plaque de fermeture (22) disposée sur celui-ci, une deuxième plaque de fermeture (24) peut être fixée, qui, lorsque le bol à combustible (3) repose à plat et la surface de fond (5) est située à peu près parallèlement au fond et le dispositif de gril (1) se trouve ainsi dans la première position de fonctionnement (B1), dans lequel la surface de couvercle (13) est retirée et/ou est remplacée par la grille de gril (11), forme le deuxième pied d'appui (35), les deux pieds d'appui (34, 35) opposés reposant chacun sur le fond par des bords marginaux (38, 39),
- dans lequel la surface de fond (5) et/ou la surface de couvercle (13) qui peut être détachée du bol à combustible (3) et y être fixée et/ou des sections de la surface latérale (7) du bol à combustible (3) présentent des ouvertures (18, 19, 19', 20, 20') pour amener de l'air de combustion et/ou pour dissiper de la chaleur lorsque du combustible enflammé se trouve dans le bol à combustible (3),
- et dans lequel le bol à combustible (3) en forme d'auge présente au moins une cloison (4, 4') qui est à peu près perpendiculaire à la surface de fond (5) et dont la direction d'extension longitudinale est à peu près perpendiculaire au premier côté (15) de la surface latérale (7) avec la première plaque de fermeture (22) disposée sur celui-ci ainsi qu'à peu près perpendiculaire au deuxième côté (17) opposé de la surface latérale (7) avec la deuxième plaque de fermeture (24) qui peut y être fixée.

2. Dispositif à grill portable selon la revendication 1, dans lequel
- le bol à combustible (3) reposant à plat, dont les faces latérales (8) sont orientées verticalement ou s'ouvrent légèrement vers l'extérieur en forme d'entonnoir, est recouvert face supérieure, dans la première position de fonctionnement (B1) du dispositif de gril (1), par la grille de gril (11) qui est en appui sur la surface latérale (7) ou espacée de celle-ci, et/ou dans lequel dispositif de gril portable
- le bol à combustible (3) est situé pour l'essentiel verticalement dans la deuxième position de fonctionnement (B2) du dispositif de gril (1), dans lequel la face frontale orientée verticalement qui fait fonction de face supérieure (9) du bol à combustible (3) dans la première position de fonctionnement (B1), est recouverte et au moins partiellement fermée par la surface de couvercle (13) fixée au bol à combustible (3) en forme d'auge dans la deuxième position de fonctionnement (B2) du dispositif de gril (1).

3. Dispositif de gril portable selon la revendication 1 ou la revendication 2, dans lequel un premier bord face frontale de la surface latérale (7), qui délimite le volume interne du bol à combustible (3) sur une première face frontale montrant vers la première plaque de fermeture (22), est pourvu d'ouvertures (19, 19') destinées à l'alimentation en air de combustion.

4. Dispositif de gril portable selon l'une quelconque des revendications 1 à 3, dans lequel la première plaque de fermeture (22) et la deuxième plaque de fermeture (24) sont chacune fermées et ferment les premières ou bien deuxièmes faces frontales sur la surface latérale (7) du bol à combustible (3) au moins approximativement dans la première position de fonctionnement (B1).

5. Dispositif de gril portable selon l'une quelconque des revendications 1 à 4, dans lequel la première plaque de fermeture (22) et la deuxième plaque de fermeture (24) sont conçues de telle sorte que la grille de gril (11) peut être disposée, dans la première position de fonctionnement (B1), à plusieurs niveaux de hauteur différents sur la première plaque de fermeture (22) et sur la deuxième plaque de fermeture (24).

6. Dispositif de gril portable selon la revendication 5, dans lequel une pluralité de fentes (42, 42', 42", 43, 43', 43) sont ménagées dans la première plaque de fermeture (22) et dans la deuxième plaque de fermeture (24) pour réaliser la pluralité de niveaux de hauteur différents.

7. Dispositif de gril portable selon l'une quelconque des revendications 1 à 6, qui comprend un insert (40) qui est de préférence conçu en tant que poêle à raclette (41), et dans lequel dispositif de gril portable ledit insert (40) peut être disposé, dans la première position de fonctionnement (B1), de manière amovible sur la première plaque de fermeture (22) et sur la deuxième plaque de fermeture (24) et/ou de manière amovible sur la surface de couvercle (13) de sorte que, lors de cela, l'insert (40) se trouve en dessous du bol à combustible (3) en forme d'auge.

8. Procédé de manipulation et/ou d'utilisation d'un dispositif de gril portable (1) selon l'une quelconque des revendications 1 à 7, dans lequel procédé on fait passer le dispositif de gril (1) à partir d'une première position de fonctionnement (B1) dans laquelle le bol à combustible (3) prend une disposition couchée avec une surface de fond (5) montrant vers le bas, et dans laquelle la face supérieure (9) du bol à combustible (3), qui est située en regard de la surface de fond (5), en particulier en disposition parallèle, et qui suit la surface latérale est ouverte et/ou est recouverte par la grille de gril (11) qui est en appui sur la surface latérale (7) ou est espacée de celle-ci, dans une deuxième position de fonctionnement (B2) dans laquelle le bol à combustible (3) prend une disposition debout et dans laquelle la face supérieure (9) est recouverte et au moins partiellement fermée par la surface de couvercle (13) qui peut être fixée au bol à combustible (3) en forme d'auge, ou vice versa.

9. Procédé de manipulation et/ou d'utilisation du dispositif de gril portable (1) selon la revendication 8, dans lequel procédé la première plaque de fermeture (22) est ou sera jointe sur un premier côté (15) de la surface latérale circonférentielle (7) du bol à combustible (3), qui, lorsque le bol à combustible (3) est debout et la surface de fond (5) et la surface de couvercle (13) sont situées à peu près verticalement par rapport à un fond et le dispositif de gril (1) se trouve ainsi dans la deuxième position de fonctionnement (B2), dans lequel la surface de couvercle (13) est fixée à la surface latérale (7), forme le pied de support (32) reposant sur un fond.

10. Procédé selon la revendication 8 ou 9, dans lequel sur un deuxième côté (17) de la surface latérale circonférentielle (7), qui est situé en regard du premier côté (15) avec la première plaque de fermeture (22) disposée sur celui-ci, la deuxième plaque de fermeture (24) peut être fixée, qui, lorsque le bol à combustible (3) repose à plat et la surface de fond (5) est située à peu près parallèlement au fond et le dispositif de gril (1) se trouve ainsi dans la première position de fonctionnement (B1), dans lequel la surface du couvercle (13) est retirée et/ou est remplacée par la grille de gril (11), forme le deuxième pied d'appui (35), les deux pieds d'appui (34, 35) opposés reposant chacun sur le fond par des bords marginaux (38, 39),

11. Procédé selon l'une quelconque des revendications 8 à 10, pour préparer le dispositif de gril portable (1), dans lequel le bol à combustible (3) dont la surface de couvercle (13) est retirée et les plaques de fermeture (22, 24) sont retirées, est équipé de portions de combustible et d'allumes-feux solides ou d'accélérateurs de feu solides ou similaires qui sont insérés dans les deux, trois, quatre ou plus chambres à combustible en forme de canal qui sont formées en divisant le bol à combustible (3) au moyen des cloisons (4, 4').

12. Procédé selon la revendication 11, dans lequel, après avoir rempli le bol à combustible de portions de combustible et d'allumes-feux ou d'accélérateurs de feu, la surface de couvercle est fixée sur le bord supérieur de la surface latérale du bol à combustible et le bol à combustible est ainsi fermé de tous côtés, et dans lequel la première plaque de fermeture (22) est fixée sur le premier côté (15) du dispositif de gril (1) ou bien sur le bol à combustible (3) en forme d'auge, et le bol à combustible (3) en forme d'auge est amené dans la deuxième position de fonctionnement (B2) où il est situé debout, ce après quoi les allumes-feux et le combustible sont allumés, dans lequel un apport d'air frais se fait d'en bas à travers les ouvertures (19) dans/sur le bol à combustible (3), situées plus près du pied de support (32), et l'évacuation des gaz d'échappement et de la chaleur se fait en réalisant un effet de cheminée, à travers l'orifice ou bien les ouvertures (19') montrant vers le haut, sur le deuxième côté (17) de la surface latérale (7).

13. Procédé selon la revendication 12, dans lequel la deuxième plaque de fermeture est jointe au bol à combustible et celui-ci est amené dans la première position de fonctionnement du dispositif de gril après que le combustible a atteint sa température de cuisson prévue.

14. Procédé selon la revendication 13, dans lequel la surface de couvercle (13) est retirée du bol à combustible (3) et est remplacée par une grille de gril (11) qui est positionnée sur des évidements ou fentes (42, 42', 42' ', 43, 43' 43") prévus à cette fin, sur les plaques de fermeture (22, 24), dans lequel il est prévu de préférence que la surface de couvercle (13) est alors insérée en position verticale en tant que brise-vent, en étant en appui sur l'une des surfaces latérales (8), entre les plaques de fermeture (22, 24).

15. Procédé selon l'une quelconque des revendications 8 à 14, dans lequel, après que des aliments ont été cuits et que du combustible est brûlé en partie, après avoir retiré la grille de gril (11), après avoir retiré la deuxième plaque de fermeture (24) du bol à combustible (3) et après avoir placé la surface de couvercle (13) sur le côté ouvert du bol à combustible (3), qui a été préalablement recouvert par la grille de gril (11), le dispositif de gril (1) est ramené dans la deuxième position de fonctionnement (B2) où il est debout afin de faire fonction de four à cuire, dans lequel, lorsque la deuxième plaque de fermeture (24) du dispositif de gril (1) qui est debout dans la deuxième position de fonctionnement (B2), est retirée, du combustible sous forme de bois, de bâtons, de branches, etc. peut être introduit par le deuxième côté (17) ouvert en haut afin de brûler à flamme nue.
